# EUROPEAN PATENT APPLICATION

(11) **EP 4 827 087 A1**
(43) Date of publication of application: **21.10.2026**
(21) Application number: 25305557.8
(22) Date of filing: 16.04.2025
(51) Int. Cl.: H04N 19/117, H04N 19/136, H04N 19/172, H04N 19/174, H04N 19/30, H04N 19/503, H04N 19/597, H04N 19/70

(54) **EXTERNAL PICTURES FORMAT SIGNALING AND INFERENCE**

(71) Applicant: InterDigital CE Patent Holdings, SAS, 75017 Paris (FR)
(72) Inventor: URBAN, Fabrice, 35235 THORIGNE-FOUILLARD (FR); CHEN, Ya, 35700 RENNES (FR); GALPIN, Franck, 35235 THORIGNE-FOUILLARD (FR)
(74) Representative: Vossius & Partner Patentanwälte Rechtsanwälte mbB

(57) **Abstract**

A device (e.g., a decoder for video decoding) may obtain an external picture. The device may obtain format information (e.g., target picture format information). For example, the device may obtain format information to be used for generating a reconstructed picture. In examples, the device may determine whether to modify the external picture based on the format information. For example, if the format information associated with the reconstructed picture differs from the format information associated with the external picture, the device may determine to modify the external picture. The device may store the external picture or a modification of the external picture based on the determination of whether to modify the external picture. For example, the device may store a modification of the external picture if the format information associated with the reconstructed picture does not correspond to the format information associated with the external picture.

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### SUMMARY

Systems, methods, and instrumentalities are disclosed for a device configured for one or more of video coding (e.g., encoding and/or decoding), distribution, or consumption.

In examples, a device (e.g., a decoder for video decoding) may obtain an external picture (e.g., based on a triggering criterion for obtaining an external picture being met). The device may obtain format information (e.g., target picture format information). For example, the device may obtain first format information (e.g., format information for reconstructing a picture). The first format information may include format information to be used for generating a reconstructed picture (e.g., picture format information of a reconstructed picture). In examples, the device may determine whether to modify the external picture based on the first format information. The device may obtain second format information. The second format information may include format information associated with the external picture. The device may determine whether to modify the external picture based on the first and second format information. The first format information and the second format information may be the same or different. For example, if the format information associated with the reconstructed picture differs from the format information associated with the external picture, the device may determine to modify the external picture. The device may store the external picture or a modification of the external picture (e.g., the modified external picture) based on the determination of whether to modify the external picture. For example, the device may store the external picture if the format information associated with the reconstructed picture corresponds to (e.g., is the same as) the format information associated with the external picture. The device may store a modification of the external picture if the format information associated with the reconstructed picture does not correspond to the format information associated with the external picture.

In examples, the first format information (e.g., the format information to be used for generating the reconstructed picture) may be obtained based on format information associated with a sequence of pictures and/or based on format information associated with a layer. The sequence and/or layer of pictures may include the reconstructed picture (and/or the external picture).

In examples, the first format information may include chroma format information associated with the reconstructed picture. The second format information may include the chroma format information associated with the external picture. The device may obtain the chroma format information associated with the external picture. The device may determine that the chroma format information associated with the external picture differs from the chroma format information associated with the reconstructed picture. The device may modify the external picture (e.g., modify the format of the external picture) according to the chroma format information associated with the reconstructed picture.

In examples, the first format information may include bit depth information associated with the reconstructed picture. The second format information may include the bit depth information associated with the external picture. The device may obtain bit depth information associated with the external picture. The device may determine that the bit depth information associated with the external picture differs from the bit depth information associated with the reconstructed picture. The device may modify the external picture (e.g., modify the format of the external picture) according to the bit depth information associated with the reconstructed picture. The modification in one or more examples as described herein may be based on one or more of bit depth rescaling, color rescaling, or color conversion.

The device may obtain the format information associated with the external picture in various ways. For example, the device may obtain the format information associated with the external picture based on signaled information (e.g., in video parameter set extension).

In examples, the device may obtain the format information associated with the external picture based on a picture associated with the second layer of a plurality of layers associated with the video content. For example, the device may determine that the video content is associated with the plurality of layers. The device may determine that a picture of the second layer (e.g., an enhancement layer) of the plurality of layers is to be predicted using one or more pictures of a first layer (e.g., a base layer) of the plurality of layers. The device may determine that the first layer of the plurality of layers includes one or more external pictures. The device may determine that a reference picture list associated with the picture of the second layer includes one or more external pictures (e.g., the one or more external pictures of the first layer). The device may obtain the second format information (e.g., the format information associated with the external picture) based on the picture associated with the second layer and/or determine whether to modify the external picture based on the second format information.

In examples, the device may obtain an external slice indicator (e.g., an indicator that indicates that an external picture and/or slice is obtained). The device, based on the external slice indicator, may determine that a current picture comprises an external slice or refers to the external slice (and/or an external picture). The device may obtain the second format information (e.g., the format information associated with the external picture) based on the current picture (e.g., based on a format of the current picture) and/or determine whether to modify the external picture based on the second format information. In one or more examples as described herein, the device may obtain the external slice indicator based on a picture header, a slice header, or a picture header network abstraction layer (NAL) unit type.

In examples, the second format information may be received in video data. The device may determine whether to modify the external picture, for example, by comparing the first and second format information.

In examples, a device (e.g., an encoder for video encoding) may obtain an external picture (e.g., based on a triggering criterion for obtaining an external picture being met). The device may obtain format information (e.g., target picture format information). For example, the device may obtain first format information (e.g., format information for reconstructing a picture). The first format information may include format information to be used for generating a reconstructed picture (e.g., picture format information of a reconstructed picture). In examples, the device may determine whether to modify the external picture based on the first format information. The device may obtain second format information. The second format information may include format information associated with the external picture. The device may determine whether to modify the external picture based on the first and second format information. The first format information and the second format information may be the same or different. For example, if the format information associated with the reconstructed picture differs from the format information associated with the external picture, the device may determine to modify the external picture. The device may store the external picture or a modification of the external picture (e.g., the modified external picture) based on the determination of whether to modify the external picture. For example, the device may store the external picture if the format information associated with the reconstructed picture corresponds to (e.g., is the same as) the format information associated with the external picture. The device may store a modification of the external picture if the format information associated with the reconstructed picture does not correspond to the format information associated with the external picture. The device may encode a video block based on the external picture or the modification of the external picture.

In examples, the first format information (e.g., the format information to be used for generating the reconstructed picture) may be obtained based on format information associated with a sequence of pictures and/or based on format information associated with a layer. The sequence and/or layer of pictures may include the reconstructed picture (and/or the external picture).

In examples, the first format information may include chroma format information associated with the reconstructed picture. The second format information may include the chroma format information associated with the external picture. The device may obtain the chroma format information associated with the external picture. The device may determine that the chroma format information associated with the external picture differs from the chroma format information associated with the reconstructed picture. The device may modify the external picture (e.g., modify the format of the external picture) according to the chroma format information associated with the reconstructed picture.

In examples, the first format information may include bit depth information associated with the reconstructed picture. The second format information may include the bit depth information associated with the external picture. The device may obtain bit depth information associated with the external picture. The device may determine that the bit depth information associated with the external picture differs from the bit depth information associated with the reconstructed picture. The device may modify the external picture (e.g., modify the format of the external picture) according to the bit depth information associated with the reconstructed picture. The modification in one or more examples as described herein may be based on one or more of bit depth rescaling, color rescaling, or color conversion.

The device may obtain the format information associated with the external picture in various ways. In examples, the device may obtain the format information associated with the external picture based on a picture associated with the second layer of a plurality of layers associated with the video content. For example, the device may determine that the video content is associated with the plurality of layers. The device may determine that a picture of the second layer (e.g., an enhancement layer) of the plurality of layers is to be predicted using one or more pictures of a first layer (e.g., a base layer) of the plurality of layers. The device may determine that the first layer of the plurality of layers includes one or more external pictures. The device may determine that a reference picture list associated with the picture of the second layer includes one or more external pictures (e.g., the one or more external pictures of the first layer). The device may obtain the second format information (e.g., the format information associated with the external picture) based on the picture associated with the second layer and/or determine whether to modify the external picture based on the second format information.

In one or more examples as described herein, the reconstructed picture may be generated using a reference picture that is not from an external decoding source.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 illustrates an example of scalable video coding.
FIG. 5 illustrates an example of a hybrid method to coding intra frames with neural networks (NN) and coding inter frames with an example video codec (e.g., a (versatile video coding) VVC codec).
FIG. 6 illustrates an example of a multilayer scheme to coding frames in a base layer with NN codec and coding frames in an enhancement layer an example video codec (e.g., a VVC codec).
FIG. 7 illustrates an example of frames with different sizes in a base layer and an enhancement layer by using scaling windows.
FIG. 8 illustrates an example of a multilayer scheme to coding frames in an enhancement layer with referencing frames in a base layer with different picture order count (POC).
FIG. 9 illustrates an example decoding process on a bitstream.
FIG. 10 illustrates an example in which loading the external picture depends on a Reference Picture List.
FIG. 11 illustrates an example in which loading the external picture depends on a network abstraction layer unit (NALU) type.
FIG. 12 illustrates an example of loading an external picture if a picture header of an external picture is received.
FIG. 13 illustrates an example of loading external picture if a picture header of an external picture is received, setting the POC and temporal identifier (TID) to current values, and marking the picture as output picture.
FIG. 14 illustrates an example of loading an external picture if the slice type is external and storing the external picture in the decoded picture buffer (DPB).
FIG. 15 illustrates an example of a process, 1500, for storing an external picture in the DPB.
FIG. 16 illustrates an example of a conformance condition checking on a slice type (e.g., the first slice type).
FIG. 17 illustrates an example of a conformance condition checking on a slice type (e.g., the first slice type).

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

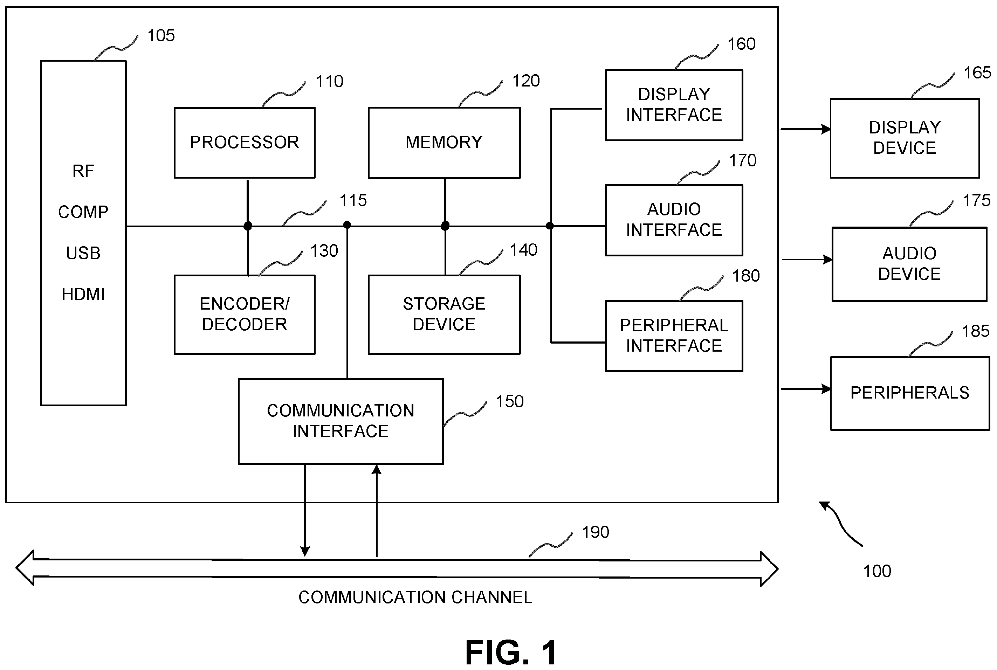

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

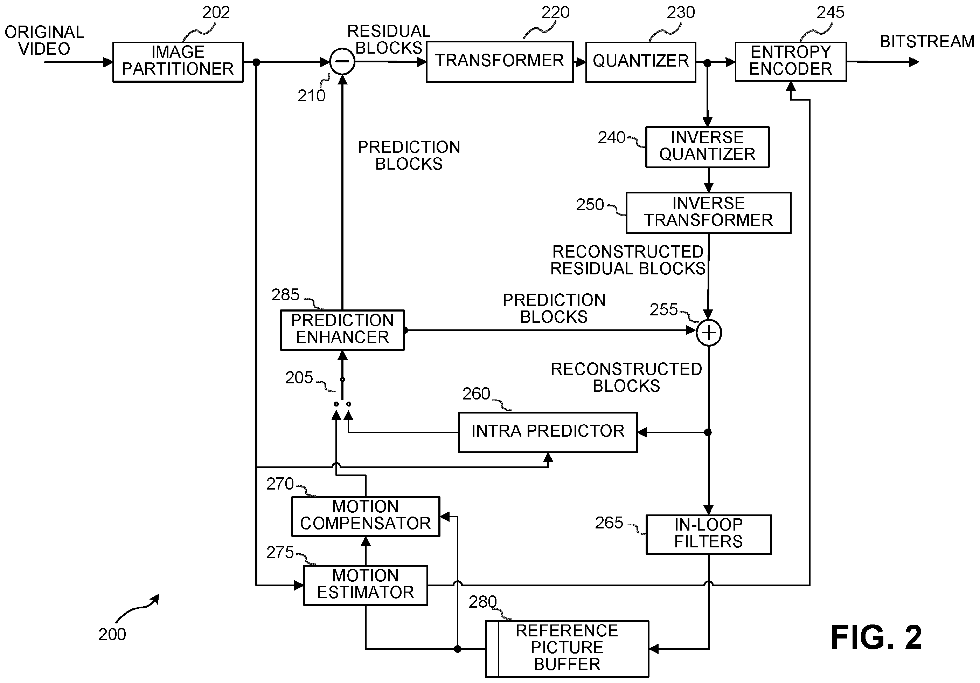

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

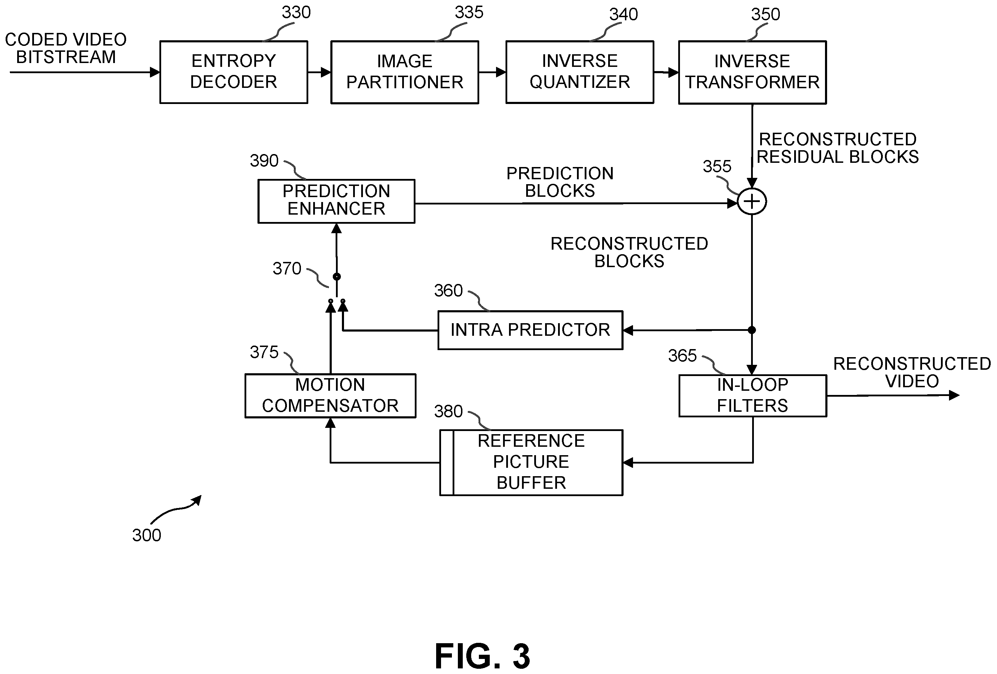

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y,* and chroma components, *U* and *V* (also denoted herein by *C*, *Cb, Cr*).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

In one or more examples herein, a combination of video codec (e.g., traditional video codec) and an external picture may be used. For example, NN-based encoder/decoder may be used for the external picture. In some examples, video codec standards (e.g., high efficiency video coding (HEVC)) and/or advance video coding (AVC) may be used (e.g., for the external picture).

Features described herein may include a bitstream syntax and multilayer structure. In block-based hybrid video coding, a standardized syntax may allow for signaling the coding tools that are active in the coded video chunks. In examples, no syntax elements may allow signaling the use of a neural network auto-encoder to encode part of the video.

A video encoder may generate (e.g., several) bitstreams (e.g., layers) which allow encoding video sequences with an enhanced quality/feature vs base layer stream. The reconstructed images may enhance resolution (e.g., spatial scalability), quality (e.g., SNR scalability), frame rate (e.g., temporal scalability), color gamut (e.g., color gamut scalability, high dynamic range scalability), bit-depth (e.g., bit-depth scalability), additional point-of-view (e.g., multi-view scalability).

Systems, methods, and instrumentalities are disclosed for a device configured for one or more of video coding (e.g., encoding and/or decoding), distribution, or consumption.

In examples, a device (e.g., a decoder for video decoding) may obtain an external picture (e.g., based on a triggering criterion for obtaining an external picture being met). The device may obtain format information (e.g., target picture format information). For example, the device may obtain first format information (e.g., format information for reconstructing a picture). The first format information may include format information to be used for generating a reconstructed picture (e.g., picture format information of a reconstructed picture). In examples, the device may determine whether to modify the external picture based on the first format information. The device may obtain second format information. The second format information may include format information associated with the external picture. The device may determine whether to modify the external picture based on the first and second format information. The first format information and the second format information may be the same or different. For example, if the format information associated with the reconstructed picture differs from the format information associated with the external picture, the device may determine to modify the external picture. The device may store the external picture or a modification of the external picture (e.g., the modified external picture) based on the determination of whether to modify the external picture. For example, the device may store the external picture if the format information associated with the reconstructed picture corresponds to (e.g., is the same as) the format information associated with the external picture. The device may store a modification of the external picture if the format information associated with the reconstructed picture does not correspond to the format information associated with the external picture.

In examples, the first format information (e.g., the format information to be used for generating the reconstructed picture) may be obtained based on format information associated with a sequence of pictures and/or based on format information associated with a layer. The sequence and/or layer of pictures may include the reconstructed picture (and/or the external picture).

In examples, the first format information may include chroma format information associated with the reconstructed picture. The second format information may include the chroma format information associated with the external picture. The device may obtain the chroma format information associated with the external picture. The device may determine that the chroma format information associated with the external picture differs from the chroma format information associated with the reconstructed picture. The device may modify the external picture (e.g., modify the format of the external picture) according to the chroma format information associated with the reconstructed picture.

In examples, the first format information may include bit depth information associated with the reconstructed picture. The second format information may include the bit depth information associated with the external picture. The device may obtain bit depth information associated with the external picture. The device may determine that the bit depth information associated with the external picture differs from the bit depth information associated with the reconstructed picture. The device may modify the external picture (e.g., modify the format of the external picture) according to the bit depth information associated with the reconstructed picture. The modification in one or more examples as described herein may be based on one or more of bit depth rescaling, color rescaling, or color conversion.

The device may obtain the format information associated with the external picture in various ways. For example, the device may obtain the format information associated with the external picture based on signaled information (e.g., in video parameter set extension).

In examples, the device may obtain the format information associated with the external picture based on a picture associated with the second layer of a plurality of layers associated with the video content. For example, the device may determine that the video content is associated with the plurality of layers. The device may determine that a picture of the second layer (e.g., an enhancement layer) of the plurality of layers is to be predicted using one or more pictures of a first layer (e.g., a base layer) of the plurality of layers. The device may determine that the first layer of the plurality of layers includes one or more external pictures. The device may determine that a reference picture list associated with the picture of the second layer includes one or more external pictures (e.g., the one or more external pictures of the first layer). The device may obtain the second format information (e.g., the format information associated with the external picture) based on the picture associated with the second layer and/or determine whether to modify the external picture based on the second format information.

In examples, the device may obtain an external slice indicator (e.g., an indicator that indicates that an external picture and/or slice is obtained). The device, based on the external slice indicator, may determine that a current picture comprises an external slice or refers to the external slice (and/or an external picture). The device may obtain the second format information (e.g., the format information associated with the external picture) based on the current picture (e.g., based on a format of the current picture) and/or determine whether to modify the external picture based on the second format information. In one or more examples as described herein, the device may obtain the external slice indicator based on a picture header, a slice header, or a picture header network abstraction layer (NAL) unit type.

In examples, the second format information may be received in video data. The device may determine whether to modify the external picture, for example, by comparing the first and second format information.

In examples, a device (e.g., an encoder for video encoding) may obtain an external picture (e.g., based on a triggering criterion for obtaining an external picture being met). The device may obtain format information (e.g., target picture format information). For example, the device may obtain first format information (e.g., format information for reconstructing a picture). The first format information may include format information to be used for generating a reconstructed picture (e.g., picture format information of a reconstructed picture). In examples, the device may determine whether to modify the external picture based on the first format information. The device may obtain second format information. The second format information may include format information associated with the external picture. The device may determine whether to modify the external picture based on the first and second format information. The first format information and the second format information may be the same or different. For example, if the format information associated with the reconstructed picture differs from the format information associated with the external picture, the device may determine to modify the external picture. The device may store the external picture or a modification of the external picture (e.g., the modified external picture) based on the determination of whether to modify the external picture. For example, the device may store the external picture if the format information associated with the reconstructed picture corresponds to (e.g., is the same as) the format information associated with the external picture. The device may store a modification of the external picture if the format information associated with the reconstructed picture does not correspond to the format information associated with the external picture. The device may encode a video block based on the external picture or the modification of the external picture.

In examples, the first format information (e.g., the format information to be used for generating the reconstructed picture) may be obtained based on format information associated with a sequence of pictures and/or based on format information associated with a layer. The sequence and/or layer of pictures may include the reconstructed picture (and/or the external picture).

In examples, the first format information may include chroma format information associated with the reconstructed picture. The second format information may include the chroma format information associated with the external picture. The device may obtain the chroma format information associated with the external picture. The device may determine that the chroma format information associated with the external picture differs from the chroma format information associated with the reconstructed picture. The device may modify the external picture (e.g., modify the format of the external picture) according to the chroma format information associated with the reconstructed picture.

In examples, the first format information may include bit depth information associated with the reconstructed picture. The second format information may include the bit depth information associated with the external picture. The device may obtain bit depth information associated with the external picture. The device may determine that the bit depth information associated with the external picture differs from the bit depth information associated with the reconstructed picture. The device may modify the external picture (e.g., modify the format of the external picture) according to the bit depth information associated with the reconstructed picture. The modification in one or more examples as described herein may be based on one or more of bit depth rescaling, color rescaling, or color conversion.

The device may obtain the format information associated with the external picture in various ways. In examples, the device may obtain the format information associated with the external picture based on a picture associated with the second layer of a plurality of layers associated with the video content. For example, the device may determine that the video content is associated with the plurality of layers. The device may determine that a picture of the second layer (e.g., an enhancement layer) of the plurality of layers is to be predicted using one or more pictures of a first layer (e.g., a base layer) of the plurality of layers. The device may determine that the first layer of the plurality of layers includes one or more external pictures. The device may determine that a reference picture list associated with the picture of the second layer includes one or more external pictures (e.g., the one or more external pictures of the first layer). The device may obtain the second format information (e.g., the format information associated with the external picture) based on the picture associated with the second layer and/or determine whether to modify the external picture based on the second format information.

In one or more examples as described herein, the reconstructed picture may be generated using a reference picture that is not from an external decoding source.

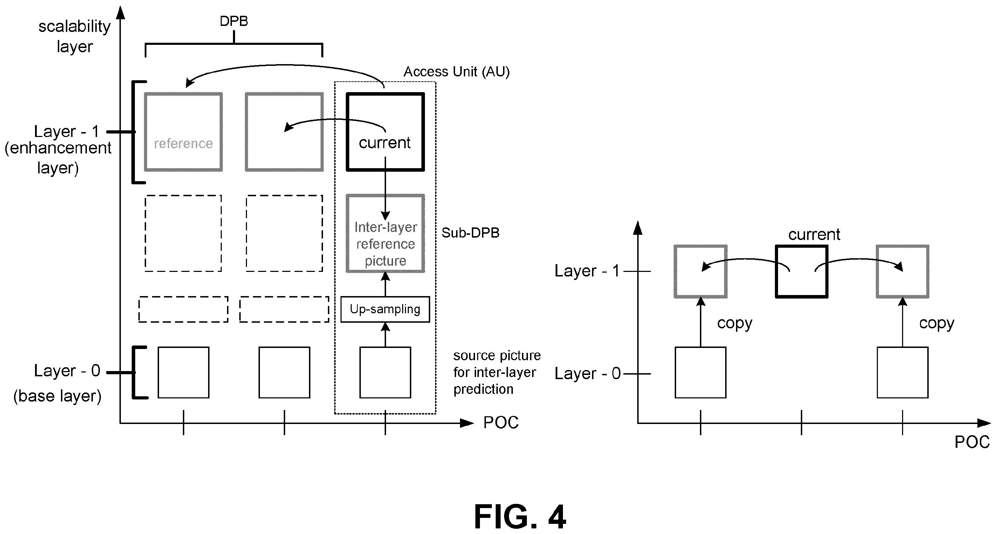

FIG. 4 illustrates an example of scalable video coding. The scalable video codecs may leverage the capability to predict blocks with reconstructed images from another bitstream/layer. FIG. 4 (left) may depict spatial scalability where the reconstructed pictures from the base layer (layer 0) may be re-scaled (e.g., up-sampled) and used as additional reference frame (e.g., inter-layer reference picture, ILRP) for building inter-prediction for the current enhancement layer (e.g., layer 1). The inter-layer reference picture (ILRP) may be temporally co-located (e.g., same picture order count, POC) with the current picture of the current layer. FIG. 4 (right) depicts temporal scalability where additional temporal pictures are coded (e.g., predicted) with reconstructed reference frames from the base layer bitstream.

In examples, a picture of a current layer may be predicted with a reconstructed picture decoded from a base layer (layer 0) coded differently (e.g., layer 1 may be encoded by x, layer 0 may be encoded by y). A mode may be addressed in an example of a base layer (layer 0), and the other layers may be coded differently.

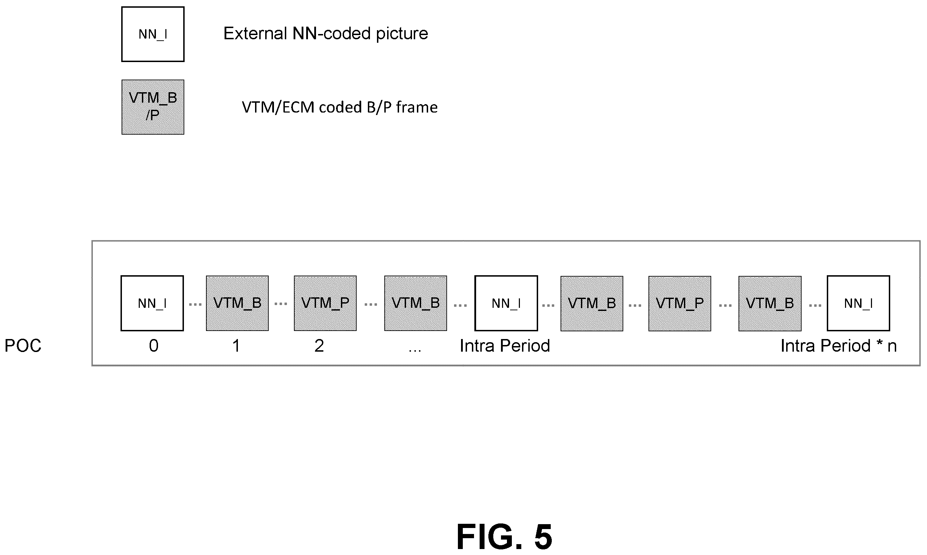

Features described herein may include a multilayer scheme for a hybrid NN codec. In order to achieve higher video compression efficiency, examples described herein to enhance video encoding use a hybrid method where Intra frames are coded using neural networks (NN), such as Implicit Neural Representation (INR) or auto encoder (e.g., while remaining Inter frames are coded for example, as shown in FIG. 5). In examples including a hybrid codec, the hybrid codec may leverage the strengths of at least one NN for the encoding process.

Features described herein may include intra frames with neural networks. Intra frames, known as keyframes, may serve as reference points for subsequent frames. Intra frames may be used as random access points, which may have an impact (e.g., a significant impact) on the quality of the subsequent frames. By using neural networks (such as INR or auto encoder) to code Intra frames, the compression efficiency and quality may be improved. At the encoder side, NN encoders may be faster than encoders that do not use neural networks. Neural networks may identify and preserve details and patterns within the frames, leading to higher quality keyframes with reduced data size. Scenes with complex textures and dynamic lighting may be associated with higher efficiency when paired with neural networks

Features described herein may be associated with inter frames. Inter frames may be coded. By using a codec (e.g., a hybrid block-based codec) for Inter frames, temporal redundancy between frames may be effectively minimized, leading to better compression rates. As used herein, the term "hybrid block-based codec" may refer to a hybrid video codec that does not use an end-to-end (fully based) NN technique.

Features described herein may include multilayer scheme for hybrid NN- codec. For the hybrid NN- codec, a multilayer scheme may allow a frame in an enhancement layer with capabilities to reference and enhance the NN-coded intra picture in the base layer. Using multilayer scheme in scalable video coding may allow the video to be encoded in one or more layers, and a layer may be coded in (e.g., different) video codecs.

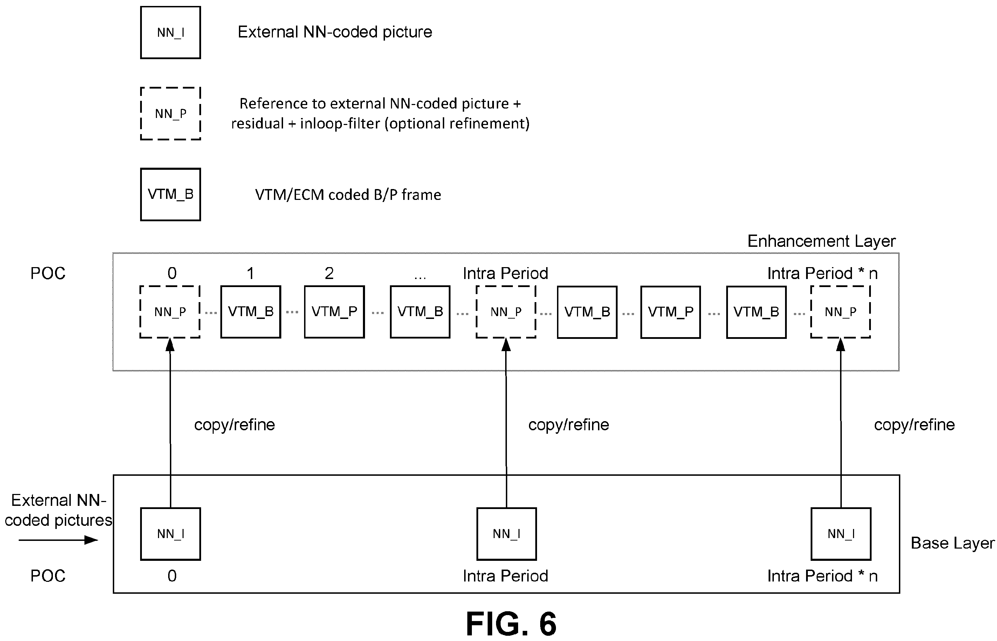

The base layer (BL) may be NN-coded (e.g., INR or auto encoder). The reconstructed pictures may be referred to as external pictures. Above the base layer, there may be enhancement layers that are coded with example (e.g., traditional) video codecs, as shown in FIG. 6.

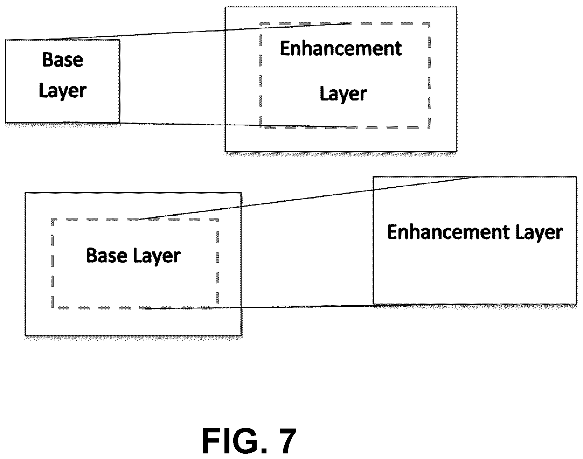

The external NN-coded pictures from the base layer (e.g., layer 0) may be used as reference frame (e.g., inter-layer reference picture) for building inter-prediction for the current enhancement layer (e.g., layer 1). The inter-layer reference picture (ILRP) may be temporally co-located (e.g., same picture order count, POC) with the current picture of the current layer. It may be of different size and/or having a different framing (e.g., by using scaling windows as depicted in FIG. 7).

The external NN-coded pictures may be (e.g., further) refined with the video residual and in-loop filter coding tools, such as adaptive loop filtering (ALF), in the enhancement layer. The refined NN-coded pictures may be used as reference frames for the subsequent inter frames. A CU may be coded intra or inter (e.g., inter with inter-layer prediction - so there may be a competition between the NN picture and the intra, and the final CU may be intra-coded. NN-coded may be determined via RDO cost).

The enhancement layer slice header and reference picture list (RPL) structure may reference an external base layer picture. An example video setup may include a base layer and an enhancement layer.

The Base Layer (Layer 0) may be provided externally with NN-coded pictures. In the Enhancement Layer (Layer 1), at each Picture Order Count (POC) that is a multiple of the intra period. The picture in the layer may use inter-layer prediction, referencing the external NN-coded pictures from the base layer. Subsequent frames may use inter prediction associated with an example coded (e.g., a VVC codec).

The base layer may include a POC of 64, which the co-located picture (e.g., POC of 64) in the enhancement layer may reference. The decoding process may include (e.g., several) operations so that the correct base layer picture may be used.

In examples, flags may be set in Video Parameter Set (VPS) to inform the decoder about the external base layer in SHVC (e.g., vps_base_layer_internal_flag = 0 // base layer may or may not be internally decoded. vps_base_layer_available_flag = 1 // base layer may be available externally). The flags may indicate that the base layer (Layer 0) is provided externally (e.g., by external means).

Flags may be used to indicate the external base layer are still missing in an example video codec (e.g., VVC codec). An operation in examples described herein may include defining/setting an additional external picture syntax within the Video Parameter Set (VPS) or Sequence Parameter Set (SPS) to inform the decoder (e.g., signal) about the external pictures in base layer.

**Table 1**

| | |
|---|---|
| video_parameter_set_rbsp() { | Descriptor |
| vps_video_parameter_set_id | u(4) |
| vps_base_layer_external_flag | u(1) |
| vps_max_layers_minus1 | u(6) |
| vps_max_sublayers_minus1 | u(3) |
| ... | ... |

or,

**Table 2**

| | |
|---|---|
| seq_parameter_set_rbsp() { | Descriptor |
| sps_seq_parameter_set_id | u(4) |
| sps_base_layer_external_flag | u(1) |
| sps_video_parameter_set_id | u(4) |
| ... | ... |

vps_base_layer_external_flag or sps_base_layer_external_flag equal to 1 may specify that pictures in the base layer are externally decoded. The flag may indicate that the base layer pictures are not decoded internally by the decoder and are provided from an external source (e.g., provided by external means). The presence of the flag may enable the decoder to correctly interpret the base layer as being externally available and not attempt to decode the flag from video data (e.g., the bitstream). The mechanism may allow for efficient handling of base layer pictures, for example, where external neural network coded pictures are used.

In examples, if/when vps_base_layer_external_flag or sps_base_layer_external_flag equals to 1, a reduced SPS may be applied for base layer, which means that some syntaxes in the SPS may not signaled and/or may be inferred to (e.g., default) values.

As an example, shown in the following table, in the reduced SPS for base layer, the partition and enabling/disabling the coding tool (e.g., MTS/LFNST/AMVR/BDOF/AFFINE/LMCS...) related syntaxes, may be discarded. Loop-filter syntaxes (e.g., ALF related) may be kept if external base layer pictures are needed to be further refined with the filtering. Table 3 is associated with a reduced sequence parameter set RBSP syntax.

**Table 3**

| Reduced_seq_parameter_set_rbsp() { | **Descriptor** |
|---|---|
| sps_seq_parameter_set_id | u(4) |
| sps_video_parameter_set_id | u(4) |
| sps_max_sublayers_minus1 | u(3) |
| sps_chroma_format_idc | u(2) |
| sps_log2_ctu_size_minus5 | u(2) |
| sps_ptl_dpb_hrd_params_present_flag | u(1) |
| if( sps_ptl_dpb_hrd_params_present_flag ) | |
| profile_tier_level( 1, sps_max_sublayers_minus1 ) | |
| sps_gdr_enabled_flag | u(1) |
| sps_ref_pic_resampling_enabled_flag | u(1) |
| if( sps_ref_pic_resampling_enabled_flag ) | |
| sps_res_change_in_clvs_allowed_flag | u(1) |
| sps_pic_width_max_in_luma_samples | ue(v) |
| sps_pic_height_max_in_luma_samples | ue(v) |
| sps_conformance_window_flag | u(1) |
| if( sps_conformance_window_flag ) { | |
| sps_conf_win_left_offset | ue(v) |
| sps_conf_win_right_offset | ue(v) |
| sps_conf_win_top_offset | ue(v) |
| sps_conf_win_bottom_offset | ue(v) |
| } | |
| sps_bitdepth_minus8 | ue(v) |
| sps_entry_point_offsets_present_flag | u(1) |
| sps_log2_max_pic_order_cnt_lsb_minus4 | u(4) |
| sps_poc_msb_cycle_flag | u(1) |
| if( sps_poc_msb_cycle_flag ) | |
| sps_poc_msb_cycle_len_minus1 | ue(v) |
| sps_num_extra_ph_bytes | u(2) |
| for( i = 0; i < (sps_num_extra_ph_bytes * 8 ); i++) | |
| sps_extra_ph_bit_present_flag[ i ] | u(1) |
| sps_num_extra_sh_bytes | u(2) |
| for( i = 0; i < (sps_num_extra_sh_bytes * 8 ); i++) | |
| sps_extra_sh_bit_present_flag[ i ] | u(1) |
| if( sps_ptl_dpb_hrd_params_present_flag ) { | |
| if( sps_max_sublayers_minus1 > 0 ) | |
| sps_sublayer_dpb_params_flag | u(1) |
| dpb_parameters( sps_max_sublayers_minus1, sps_sublayer_dpb_params_flag ) | |
| } | |
| sps_alf_enabled_flag | u(1) |
| sps_long_term_ref_pics_flag | u(1) |
| if( sps_video_parameter_set_id > 0 ) | |
| sps_inter_layer_prediction_enabled_flag | u(1) |
| sps_idr_rpl_present_flag | u(1) |
| sps_rpl1_same_as_rpl0_flag | u(1) |
| for( i = 0; i < ( sps_rpl1_same_as_rpl0_flag ? 1 : 2 ); i++) { | |
| sps_num_ref_pic_lists[ i ] | ue(v) |
| for(j = 0; j < sps_num_ref_pic_lists[ i ]; j++) | |
| ref_pic_list_struct( i, j ) | |
| } | |
| if( sps_chroma_format_idc = = 1 ) { | |
| sps_chroma_horizontal_collocated_flag | u(1) |
| sps_chroma_vertical_collocated_flag | u(1) |
| } | |
| if( sps_ptl_dpb_hrd_params_present_flag ) { | |
| sps_timing_hrd_params_present_flag | u(1) |
| if( sps_timing_hrd_params_present_flag ) { | |
| general_timing_hrd_parameters( ) | |
| if( sps_max_sublayers_minus1 > 0 ) | |
| sps_sublayer_cpb_params_present_flag | u(1) |
| firstSubLayer = sps_sublayer_cpb_params_present_flag ? 0 : | |
| sps_max_sublayers_minus1 | |
| ols_timing_hrd_parameters( firstSubLayer, sps_max_sublayers_minus1 ) | |
| } | |
| } | |
| sps_field_seq_flag | u(1) |
| sps_vui_parameters_present_flag | u(1) |
| if( sps_vui_parameters_present_flag ) { | |
| sps_vui_payload_size_minus1 | ue(v) |
| while( !byte_aligned( ) ) | |
| sps_vui_alignment_zero_bit | f(1) |
| vui_payload( sps_vui_payload_size_minus1 + 1 ) | |
| } | |
| sps_extension_flag | u(1) |
| if( sps_extension_flag ) | |
| while( more_rbsp_data( ) ) | |
| sps_extension_data_flag | u(1) |
| rbsp_trailing_bits( ) | |
| } | |

The reduced set version may be applied to the Picture Parameter Set (PPS) / Slice Header (SH) / Picture Header (PH) if/when transmitted for the base layer.

When the current picture in the enhancement layer and its reference base layer external pictures share the same POC, an enhancement layer frame at POC equal to Intra-period (e.g., 64) may reference a base layer frame at POC equal to Intra-period (e.g., 64), as shown in FIG. 6. The corresponding base layer frame may be (e.g., need to be) added (e.g., loaded) to the decoded picture buffer (DPB). If/when the (e.g., new) introduced vps_base_layer_external_flag or sps_base_layer_external_flag is equal to 1, the external pictures in the base layer may be stored in the DPB and marked as used for long-term reference, which could be used as references for the future frames. The decoder may check and locate the corresponding external base layer frame in the DPB before decoding the enhancement layer.

sps_inter_layer_prediction_enabled_flag equal to 1 specifies that inter-layer prediction may be enabled for the CLVS and ILRPs may be used for inter prediction of one or more coded pictures in the CLVS. A sps_inter_layer_prediction_enabled_flag equal to 0 specifies that inter-layer prediction may be disabled for the CLVS and no ILRP may be used for inter prediction of a coded picture in the CLVS. If/when sps_video_parameter_set_id is equal to 0, the value of sps_inter_layer_prediction_enabled_flag may be inferred to be equal to 0. if/when vps_independent_layer_flag[ GeneralLayerIdx[ nuh_layer_id ] ] is equal to 1, the value of sps_inter_layer_prediction_enabled_flag may be equal to 0.

For the enhancement layers to correctly reference externally provided base-layer pictures, sps_inter_layer_prediction_enabled_flag in SPS may be coded. The second operation in examples described herein may allow coding sps_inter_layer_prediction_enabled_flag if vps_base_layer_external_flag or sps_base_layer_external_flag equals to 1, for example, as depicted in Table 4.

**Table 4**

| | |
|---|---|
| seq_parameter_set_rbsp( ) { | **Descriptor** |
| ... | ... |
| if( sps_video_parameter_set_id > 0 \|\| vps_base_layer_external_flag > 0) | |
| sps_inter_layer_prediction_enabled_flag | u(1) |
| ... | ... |

When both sps_base_layer_external_flag and sps_inter_layer_prediction_enabled_flag equal to 1, the reference picture list (RPL) in the enhancement layer may allow the current picture to refer the base layer external picture at the same POC, for example, with an RPL configuration.

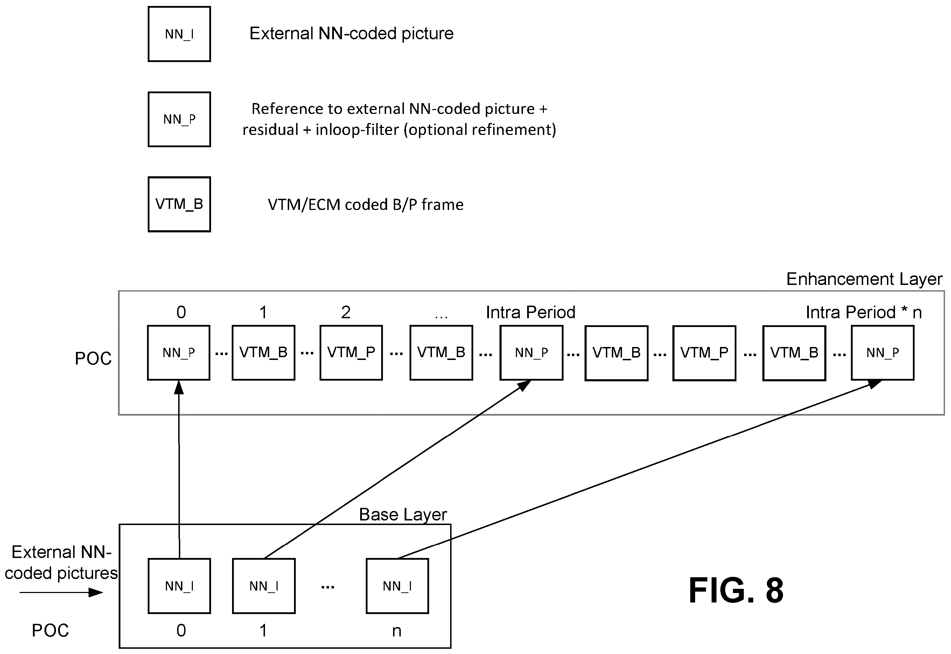

If/when the current picture in the enhancement layer and its reference base layer external picture is not sharing the same POC, as shown in FIG. 8, it may be assigned the correct POC value to ensure proper referencing pictures at an intra period may be external NN-coded and be stored in the base layer as shown in FIG. 8, which could reduce the external bitstream size. In examples case, an enhancement layer frame with POC equal to Intra-period (e.g., 64) may reference a corresponding base layer external coded frame with POC equal to 1.

In examples, the third operation in examples described herein may configure RPL to include pictures from an external base layer by assigning the correct POC values for proper referencing with additional syntax. The assignment may use the absolute POC value, or a POC delta value of the difference between the POC value of enhancement and the POC value of base layer, or a relative value of dividing the POC value of enhancement layer to a signaled ratio value.

The following includes an example to assign a relative value of dividing the POC value of an enhancement layer to a signaled ratio value, as depicted in Table 5.

**Table 5**

| | |
|---|---|
| seq_parameter_set_rbsp( ) { | **Descriptor** |
| ... | ... |
| if( sps_video_parameter_set_id > 0 ∥ vps_base_layer_external_flag > 0) | |
| sps_inter_layer_prediction_enabled_flag | u(1) |
| if(sps_inter_layer_prediction_enabled_flag > 0 && | |
| vps_base_layer_external_flag > 0) | |
| sps_baselayer_external_poc_ratio_minus1 | ue(v) |
| sps_base_layer_external_poc_offset | ue(v) |
| ... | ... |

sps_base_layer_external_poc_ratio_minus1 specifies the value of the ratio between the POC value of the current picture in an enhancement layer to the POC value of its reference picture in the base layer, minus one.

When the value of sps_base_layer_external_poc_ratio_minus1 equal to 1, the current picture in the enhancement layer and its reference base layer external picture may be sharing the same POC. If/when the value of sps_base_layer_external_poc_ratio_minus1 equal to 63, then an enhancement layer picture whose POC corresponds to one or more intra period (e.g., intra period equal to 64) in the enhancement layer may allow ILRP, which may reference external pictures in the base layer.

sps_base_layer_external_poc_offset may indicate the value of an offset between the POC value of the current picture in the enhancement layer and the POC value of its reference picture in the base layer. The POC offset may be applied before the POC ratio computation.

Modifications may be described herein for a decoding process for picture order count that a video coded which assigns a valid POC of the externally provided reference picture.

Features described herein may be associated with a decoding process for reference picture lists construction.

If (there is a reference picture picA in the DPB with the same nuh_layer_id as the current picture and PicOrderCntVal equal to RefPicPocList[ i ][ j ] )

```
         RefPicList[ i ][ j ] = picA
        else if( there is available external reference picture
base_layer_external_pic in the DPB )
         RefPicList[i][j]=base_layer_external_pic
 [PicOrderCntVal/(sps_base_layer_external_poc_ratio_minus1+1)]
        else
         RefPicList[ i ][ j ] = no reference picture
```

The decoder may find the external base layer reconstructed picture if the DPB of the current layer does not contain a picture with the POC listed in the RPL.

Examples described herein of referencing external base layer pictures in enhancement layers may involve (e.g., several) operations. The enhancement layer may use additional VPS/SPS and RPL syntaxes to correctly reference the base layer picture which may be provided externally.

Features described herein may be associated with an external parameter set (EPS) or a Supplemental Enhancement Information (SEI) message.

To minimize the syntaxes modification of the SPS/PPS/SH/PH examples described herein include determining a (e.g., new) parameter set called External Parameter Set (EPS) tailored for an externally provided layer or reference pictures.

An External Parameter Set (EPS) may be a cherry pick of SPS, PPS, SH and PH syntaxes that could describe the external reference (e.g., resolution, chroma format, bit depth and conformance window, POC ratio) which may be available for correct decoding. EPS could replace SPS, PPS, SH and PH, if/when the introduced syntax vps_base_layer_external_flag equals to 1. Table 6 includes an example of syntax in tabular form for the External Parameter Set.

**Table 6: External parameter set RBSP syntax**

| | |
|---|---|
| ext_parameter_set_rbsp( ) { | **Descriptor** |
| if(vps_base_layer_external_flag > 0) { | |
| eps_pic_width_max_in_luma_samples | ue(v) |
| eps_pic_height_max_in_luma_samples | ue(v) |
| chroma_and_bit_depth_eps_present_flag | u(1) |
| if( chroma_and_bit_depth_eps_present_flag ) { | |
| chroma_format_eps_idc | u(2) |
| bit_depth_eps_luma_minus8 | u(4) |
| bit_depth_eps_chroma_minus8 | u(4) |
| } | |
| eps_conformance_window_flag | u(1) |
| if( eps_conformance_window_flag ) { | |
| eps_conf_win_left_offset | ue(v) |
| eps_conf_win_right_offset | ue(v) |
| eps_conf_win_top_offset | ue(v) |
| eps_conf_win_bottom_offset | ue(v) |
| } | |
| eps_poc_ratio_minus1 | ue(v) |
| rbsp_trailing_bits( ) | |
| } | |
| } | |

eps_pic_width_max_in_luma_samples specifies the maximum width, in units of luma samples, of a decoded picture referring to the EPS. eps_pic_width_max_in_luma_samples may not be equal to 0 and may be an integer one or more of Max( 8, MinCbSizeY ).

sps_pic_height_max_in_luma_samples specifies the maximum height, in units of luma samples, of a decoded picture referring to the EPS. eps_pic_height_max_in_luma_samples may not be equal to 0 and may be an integer one or more of Max( 8, MinCbSizeY ).

chroma_and_bit_depth_eps_present_flag equal to 1 specifies that the syntax elements chroma_format_eps_idc, bit_depth_eps_luma_minus8 and bit_depth_eps_chroma_minus8 are present in the ext_parameter_set_rbsp( ) structure.

chroma_format_eps_idc, bit_depth_eps_luma_minus8 and bit_depth_eps_chroma_minus8 specify the chroma sampling relative to the luma sampling and the bit depth of the samples of the luma and chroma arrays.

eps_conformance_window_flag equal to 1 indicates that the conformance cropping window offset parameters follow in the EPS. eps_conformance_window_flag equal to 0 indicates that the conformance cropping window offset parameters are not present in the EPS.

eps_conf_win_left_offset, eps_conf_win_right_offset, eps_conf_win_top_offset, and eps_conf_win_bottom_offset specify the cropping window that is applied to pictures width equal to eps_pic_width_max_in_luma_samples and height equal to eps_pic_height_max_in_luma_samples. if/when eps_conformance_window_flag is equal to 0, the values of eps_conf_win_left_offset, eps_conf_win_right_offset, eps_conf_win_top_offset, and eps_conf_win_bottom_offset are inferred to be equal to 0.

eps_poc_ratio_minus1 specifies the value of the ratio between the POC value of the current picture in enhancement layer to the POC value of its reference picture in the base layer, minus one.

Features described herein may include an SEI message. Examples may include adding metadata or an SEI message describing the external reference (e.g., resolution, chroma format, bit depth and conformance window, POC ratio...), which may be available for correct decoding.

Features described herein may include NN NAL unit type and NN slice type. When the reference frames are NN-coded, information may not be available or may need adjustments for the current frame. This may include intra prediction modes, partitioning prediction, CABAC initialization, or prediction modes that are present in traditional coding methods. Network abstraction layer (NAL) unit types and slice types may be designed for coding methods and may not fully accommodate the features of NN-coded frames. To address these discrepancies, it may be beneficial to determine (e.g., new) NAL unit types and/or slice types that may accommodate the characteristics of NN-coded frames.

In examples described herein, (e.g., new) NAL unit and/or slice-type types tailored for NN-coded frames may be introduced.

Features described herein may include an NN NAL unit type. The decoder may know if/when neural network (NN) is used to decode the frame. A (e.g., each) slice may be included within an NAL unit. The NAL unit type (e.g., nal_unit_type) may indicate, to the decoder, how to handle the slice at a higher level. To do so, a (e.g., new) NAL unit type may be introduced for addressing NN-coded slices.

The nal_unit_type field may be already 5 bits (supports 0-31 values), and free space may be available to use an unspecified non-VCL NAL unit type (e.g., UNSPEC_28) as a (e.g., new) NN VCL NAL unit type (e.g., NN_NUT) in the Table 7.

**Table 7: NAL unit type codes and NAL unit type classes**

| **nal_unit_typ e** | **Name of nal_unit_type** | **Content of NAL unit and RBSP syntax structure** | **NAL unit type class** |
|---|---|---|---|
| 0 | TRAIL_NUT | Coded slice of a trailing picture or subpicture* | VCL |
| | | slice_layer_rbsp( ) | |
| 1 | STSA_NUT | Coded slice of an STSA picture or subpicture* | VCL |
| | | slice_layer_rbsp( ) | |
| 2 | RADL_NUT | Coded slice of a RADL picture or subpicture* | VCL |
| | | slice_layer_rbsp( ) | |
| 3 | RASL_NUT | Coded slice of a RASL picture or subpicture* | VCL |
| | | slice_layer_rbsp( ) | |
| 4..6 | RSV_VCL_4.. | Reserved non-IRAP VCL NAL unit types | VCL |
| | RSV_VCL_6 | | |
| 7 | IDR_W_RADL | Coded slice of an IDR picture or subpicture* | VCL |
| 8 | IDR_N_LP | slice_layer_rbsp( ) | |
| 9 | CRA_NUT | Coded slice of a CRA picture or subpicture* | VCL |
| | | slice_layer_rbsp( ) | |
| 10 | GDR_NUT | Coded slice of a GDR picture or subpicture* | VCL |
| | | slice_layer_rbsp( ) | |
| 11 | RSV_IRAP_11 | Reserved IRAP VCL NAL unit type | VCL |
| 12 | OPI_NUT | Operating point information | non-VCL |
| | | operating_point_information_rbsp( ) | |
| 13 | DCI_NUT | Decoding capability information | non-VCL |
| | | decoding_capability_information_rbsp( ) | |
| 14 | VPS_NUT | Video parameter set | non-VCL |
| | | video_parameter_set_rbsp( ) | |
| 15 | SPS_NUT | Sequence parameter set | non-VCL |
| | | seq_parameter_set_rbsp( ) | |
| 16 | PPS_NUT | Picture parameter set | non-VCL |
| | | pic_parameter_set_rbsp( ) | |
| 17 | PREFIX_APS_NUT | Adaptation parameter set | non-VCL |
| 18 | SUFFIX_APS_NUT | adaptation_parameter_set_rbsp( ) | |
| 19 | PH_NUT | Picture header | non-VCL |
| | | picture_header_rbsp( ) | |
| 20 | AUD_NUT | AU delimiter | non-VCL |
| | | access_unit_delimiter_rbsp( ) | |
| 21 | EOS_NUT | End of sequence | non-VCL |
| | | end_of_seq_rbsp( ) | |
| 22 | EOB_NUT | End of bitstream | non-VCL |
| | | end_of_bitstream_rbsp( ) | |
| 23 | PREFIX_SEI_NUT | Supplemental enhancement information | non-VCL |
| 24 | SUFFIX_SEI_NUT | sei_rbsp( ) | |
| 25 | FD_NUT | Filler data | non-VCL |
| | | filler_data_rbsp( ) | |
| 26 | RSV_NVCL_26 | Reserved non-VCL NAL unit types | non-VCL |
| 27 | RSV_NVCL_27 | | |
| 28 | NN_NUT | Coded slice of a NN-coded picture or subpicture* | VCL |
| | | slice_layer_rbsp( ) | |
| 29..31 | UNSPEC_29.. | Unspecified non-VCL NAL unit types | non-VCL |
| | UNSPEC_31 | | |
| * indicates a property of a picture if/when pps_mixed_nalu_types_in_pic_flag is equal to 0 and a property of the subpicture if/when pps_mixed_nalu_types_in_pic_flag is equal to 1. | | | |

For a VCL NAL unit that includes nal_unit_type equal to NN_NUT, a picture and/or a subpicture may be coded with neural networks. If/when nal_unit_type is equal to NN_NUT, which kind of slices it may carry may be defined in slice header (SH). Adjustments for disabling/enabling tools (e.g., disabling ALF, LMCS, and/or Scaling list) may be introduced in SH or picture header (PH).

Examples may include modifications in SH for adapting (e.g., new) introduced nal_unit_type, for example, as depicted in Table 8:

**Table 8**

| | |
|---|---|
| slice_header( ) { | **Descriptor** |
| ... | ... |
| if( ph_inter_slice_allowed_flag \| \| nal_unit_type = = NN_NUT ) | |
| sh_slice_type | ue (v) |
| if( nal_unit_type = = IDR_W_RADL \| \| nal_unit_type = = IDR_N_LP \| \| nal_unit_type = = CRA_NUT \| \| nal_unit_type = = GDR_NUT && nal_unit_type = = NN_NUT) | |
| sh_no_output_of_prior_pics_flag | u(1) |
| if( sps_alf_enabled_flag && !pps_alf_info_in_ph_flag && nal_unit_type ! = NN_NUT) | |
| { | |
| sh_alf_enabled_flag | u(1) |
| ... | ... |
| if( ph_Imcs_enabled_flag && !sh_picture_header_in_slice_header_flag && nal_unit_type ! = NN_NUT) | |
| sh_Imcs_used_flag | u(1) |
| if( ph_explicit_scaling_list_enabled_flag && !sh_picture_header_in_slice_header_flag && nal_unit_type ! = NN_NUT) | |
| sh_explicit_scaling_list_used_flag | u(1) |
| ... | ... |
| } | |

Features described herein may include a NN slice type. A slice type may be defined in the SH, with three slice types defined (e.g., B slice / P slice / I slice). A (e.g., new) N slice type may be introduced in the slice header to indicate the current slice is NN-coded. sh_slice_type specifies that the coding type of the slice is modified in examples, such as in Table 9.

**Table 9: Name association to sh_slice_type**

| **sh_slice_type** | **Name of sh_slice_type** |
|---|---|
| 0 | B (B slice) |
| 1 | P (P slice) |
| 2 | I (I slice) |
| 3 | N (NN-coded slice) or other |

For example, if one of the following conditions is true, the value of sh_slice_type may be inferred to be equal to 3: when the vps_base_layer_external_flag / sps_base_layer_external_flag equals to 1; or when the value of nal_unit_type equals to NN_NUT.

When sh_slice_type is N, adjustments of the prior-art definition could be introduced in PH, SH, and/or in low-level syntax (e.g., Coding unit syntax).

Features described herein may include adjustments for an NN slice type in picture header. For example, consider ph_intra_slice_allowed_flag and ph_inter_slice_allowed_flag in PH. Both flags may be set to 0 if/when coded slices of the picture include sh_slice_type equal to 3, as the current slice may be neither intra coded nor inter coded, and may be NN-coded instead.

ph_inter_slice_allowed_flag equal to 0 specifies that all coded slices of the picture include sh_slice_type equal to 2 or 3. ph_inter_slice_allowed_flag equal to 1 specifies that there may or may not be one or more coded slices in the picture that include sh_slice_type equal to 0 or 1.

ph_intra_slice_allowed_flag equal to 0 specifies that coded slices of the picture include sh_slice_type equal to 0 or 1 or 3. ph_intra_slice_allowed_flag equal to 1 specifies that there may or may not be one or more coded slices in the picture that includes sh_slice_type equal to 2. When not present, the value of ph_intra_slice_allowed_flag may be inferred to be equal to 1.

Features described here may include an NN slice type in a slice header. For examples in SH, if/when sh_slice_type of the current slice, or reference slice of the current slice, equals to N slice, the CABAC initialization may be skipped, or be treated as sh_slice_type equal to I slice, which the derivation process may be as follows:

```
    if( sh_slice_type = = I || sh_slice_type = = N)
       initType = 0
     else if( sh_slice_type = = P )
       initType = sh_cabac_init_flag ? 2 : 1
     else
       initType = sh_cabac_init_flag ? 1 : 2
```

**Table 10**

| | |
|---|---|
| slice_header( ) { | **Descriptor** |
| ... | ... |
| if( sh_slice_type != I \| \| sh_slice_type != N) { | |
| if( pps_cabac_init_present_flag ) | |
| sh_cabac_init_flag | u(1) |
| ... | ... |
| } | |
| ... | ... |
| } | |

Adjustments may be made for (e.g., new) NN slice type in a coding unit syntax level. For coding unit syntax, if/when sh_slice_type equals to N slice, additional (e.g., new) values or default values might be set for the (e.g., new) introduced NN-coded slice. Mode Type might be set to a (e.g., new) defined syntax MODE_TYPE_NN if/when sh_slice_type equals to N slice. In an example, the intra prediction mode may be inferred to be equal to PLANAR mode for the N slice; or a virtual intra prediction mode for a block may be derived and set for the N slice. Moreover, if/when the reference slice of the current slice is N slice, the temporal partitioning prediction may be disabled for the current slice.

Features described herein may include an external bitstream with NN-coded frames. To minimize syntax modification, an external NN-coded bitstream may be provided. After an external NN-coded bitstream is separately decoded with an unspecified NN codec, the external reconstrued NN-coded picture may be stored as reference pictures in a decoded picture buffer (DPB).

Since video data (e.g., the bitstream) may be externally provided, the decoder (e.g., a VVC decoder) may not decode the external reference frames from the current bitstream. The external pictures instead may be decoded from the external bitstream by a decoder using an unspecified NN codec. Once decoded, they may be stored in the DPB and marked as used for long-term reference. Future frames in the bitstream (e.g., a VVC bitstream) may use them as references.

If the enhancement layer is to refer to a base layer picture from the external bitstream later in the video, it may access it because it has been stored in the DPB as a long-term reference. To determine whether the enhancement layer may correctly reference base-layer pictures provided by the external bitstream, an NN decoder may first decode the external bitstream. The decoded frames may be inserted into the DPB, allowing the decoder to find the corresponding base layer frame in the DPB before decoding the enhancement layer. The process may be integrated within the single layer framework, or multilayer framework. The external bitstream may use possible codecs (e.g., other than an NN codec).

Example decoding processes (e.g., a VTM decoding process) are provided herein.

The video bitstream may be received by the decoder in bursts (e.g., chunks) of data. The bursts/chunks of data may be referred to as Network Abstraction Layer Units (NALUs). NALUs may be decodable elements of the bitstream. NALUs may have a header. The header may be decodable and include a layer Identification (layerld), a temporal Identification (Tid), and/or a NALU type. Table 11 illustrates NALU type examples and their meaning (e.g., purpose).

**Table 11: NALU type examples**

| NALU_Type | Purpose |
|---|---|
| TRAIL_NUT | Coded slice of a trailing picture or subpicture |
| STSA_NUT | Coded slice of an STSA picture or subpicture |
| RADL_NUT | Coded slice of a RADL picture or subpicture |
| RASL_NUT | Coded slice of a RASL picture or subpicture |
| IDR_W_RADL | Coded slice of an IDR picture or subpicture |
| IDR_N_LP | |
| CRA_NUT | Coded slice of a CRA picture or subpicture |
| GDR_NUT | Coded slice of a GDR picture or subpicture |
| VPS_NUT | Video parameter set |
| SPS_NUT | Sequence parameter set |
| PPS_NUT | Picture parameter set |
| PREFIX_APS_NUT | Adaptation parameter set |
| SUFFIX_APS_NUT | |
| PH_NUT | Picture header |
| PREFIX_SEI_NUT | Supplemental enhancement information |
| SUFFIX_SEI_NUT | |

A video parameter set (VPS) may be present (e.g., may be mandatory) if (e.g., only if) the bitstream is a multilayer bitstream. The video parameter set may be the first received parameter set. The video parameter set may define layers, their relations (e.g., layer dependencies), possible outputs associated with decoder profile, and/or level to be decoded (e.g., needed to be decoded).

A sequence parameter set (SPS) may be the second received parameter set (e.g., the first received parameter set following the VPS, if present). The sequence parameter set may include the ID of the referenced VPS, if any. The sequence parameter set may define the sequence parameters (e.g., chroma format, bit depth, and/or coding tool options with which to decode the bitstream). If the bitstream is a multilayer bitstream, a (e.g., one) SPS may be present per layer.

A picture parameter set may be received after the SPS. The picture parameter set may include the ID of the referenced SPS. The picture parameter set may define picture parameters, such as the resolution, for example.

An adaptation parameter set (APS) may define parameters that change during the sequence. Multiple pictures may share the same parameters. The APS may be associated with loop filtering (e.g., adaptive loop filtering (ALF)), Luma Mapping With Chroma Scaling (LMCS), and/or quantification (e.g., quantification scaling matrices).

Supplemental enhancement information may refer to additional information supported by the decoder to modify the way the picture is presented. Supplemental enhancement information may refer to additional information related to the pictures (e.g., film grain, High Dynamic Range parameters, frame packing, display orientation, etc.).

A picture may be coded in one or more coded slices. The NALU type used to code the slices may depend on the picture type.

For example, a NALU type may be used to code a slice of a trailing picture. Trailing pictures associated with an IRAP or GDR picture may follow the IRAP or GDR picture in decoding order.

A NALU type may be used to code a slice of a step-wise temporal sublayer access (STSA) picture (e.g., a temporal scalability switching point picture). An STSA picture may not use pictures in the same layer and with the same Temporalld as the STSA picture for inter prediction reference. Pictures following an STSA picture in decoding order in the same layer and with the same Temporalld as the STSA picture may not use pictures prior to the STSA picture in decoding order in the same layer and with the same Temporalld as the STSA picture for inter prediction reference. An STSA picture may enable up-switching, for example, at the STSA picture, to the sublayer containing the STSA picture, from the immediately lower sublayer of the same layer (e.g., if the coded picture does not belong to the lowest sublayer). STSA pictures in an independent layer may have Temporalld greater than 0.

A NALU type may be used to code a slice of a random access decodable leading (RADL) picture. The RADL picture may follow the IDR picture (IDR_W_RADL) in decoding order. The RADL picture may come before the IDR picture in output order (e.g., BBBBBI GOP: B pictures are decodable leading pictures)

RADL pictures (e.g., all RADL pictures) may be leading pictures. A RADL picture with nuh_layer_id equal to layerld may not be used as a reference picture for the decoding process of a (e.g., any) picture with nuh_layer_id equal to layerld that follows, in output order, the IRAP picture associated with the RADL picture. If sps_field_seq_flag is equal to 0, RADL pictures (e.g., all RADL pictures, if present) may precede, in decoding order, non-leading pictures (e.g., all non-leading pictures) of the same associated IRAP picture.

A NALU type may be used to code a slice of a random access skipped leading (RASL) picture. The RASL picture may come after a CRA in decoding order. The RADL picture may come before the CRA in output order.

RASL pictures (e.g., all RASL pictures) may be leading pictures of an associated CRA picture. If the associated CRA picture has NoOutputBeforeRecoveryFlag equal to 1, the RASL picture may not be output and/or may not be correctly decodable (e.g., the RASL picture may include references to pictures that are not present in the bitstream). RASL pictures may not be used as reference pictures for the decoding process of non-RASL pictures in the same layer. A RADL subpicture, if present, in a RASL picture in the same layer may be used for inter prediction of the collocated RADL subpicture in a RADL picture that is associated with the same CRA picture as the RASL picture. If sps_field_seq_flag is equal to 0, RASL pictures (e.g., all RASL pictures, if present) may precede, in decoding order, non-leading pictures (e.g., all non-leading pictures) of the same associated CRA picture.

A NALU type may be used to code a slice of an instantaneous decoding refresh (IDR) picture (e.g., an Intra Random Access Point (IRAP), IDR_W_RADL, and/or IDR_N_LP).

An IDR picture may not use inter prediction in its decoding process. The IDR picture may be the first picture in the bitstream in decoding order or may appear later in the bitstream. If an IDR picture for which a (e.g., each) VCL NAL unit has nal_unit_type equal to IDR_W_RADL, the IDR picture may have associated RADL pictures. If an IDR picture for which a (e.g., each) VCL NAL unit has nal_unit_type equal to IDR_N_LP, the IDR picture may not have any associated leading pictures. An IDR picture may not have associated RASL pictures.

A NALU type may be used to code a slice of a clean random access (CRA) picture (e.g. IRAP picture). A CRA picture may not use inter prediction in its decoding process. A CRA picture may be the first picture in the bitstream in decoding order or may appear later in the bitstream. A CRA picture may have associated RADL or RASL pictures. If a CRA picture has NoOutputBeforeRecoveryFlag equal to 1, the associated RASL pictures may not be output by the decoder (e.g., if the RASL pictures are not decodable, for example, if they include references to pictures that are not present in the bitstream).

A NALU type may be used to code a slice of a gradual decoding refresh (GDR) picture. If a (e.g., any) slice of the picture has nal_unit_type equal to GDR_NUT, other slices (e.g., all other slices) of the picture may have the same value of nal_unit_type. The picture may be known to be a GDR picture after receiving the first slice.

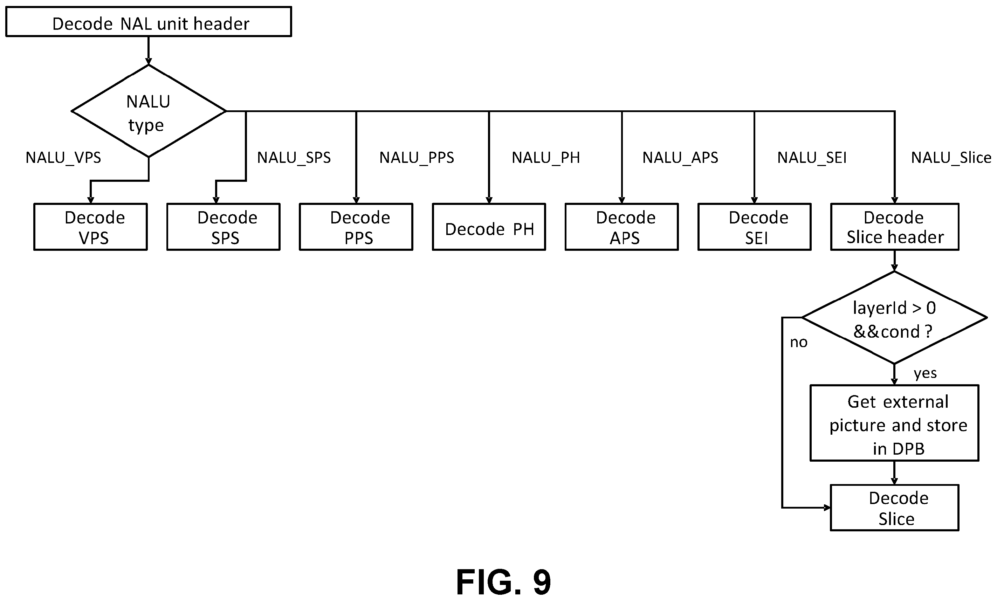

An example decoding process on a bitstream is illustrated in FIG. 9.

"cond" may refer to a condition in which vps_base_layer_internal_flag is equal to 0, vps_base_layer_available_flag is equal to 1, TargetDecLayerSetldx is in the range of 0 to vps_num_layer_sets_minus1, inclusive, and Temporalld is less than or equal to sub_layers_vps_max_minus1[0].

The bitstream may be received (and decoded) by the decoder NALU by NALU. The first NALU may be a VPS if the bitstream is a multilayer bitstream (e.g., otherwise the VPS may be optional). The SPS may be received (e.g., as the first or second NALU, depending on whether the VPS is included in the bitstream). The PPS may be received (e.g., as the second or third NALU, depending on whether the VPS is included in the bitstream). Then prefix APSs and SEls may be received. If the picture header is not in the slice header, the picture header may be transmitted in its own NALU. The slice NALUs may be received. Decoding slice NALUs may involve decoding the slices. Then suffix SEls and APSs may be received.

If a slice is decoded, the slice header may be decoded (e.g., first decoded) where reference picture lists (RPLs) are finalized for the slice (e.g., the RPL(s) may be defined in SPS, the picture header, and/or the slice header). If RPLs are signaled in the SPS, the index of the RPL may be sent in the slice header. Long term reference picture information may be signaled in the slice header.

Reference picture lists may identify the pictures used for inter-picture prediction in the decoding process of the currently decoded picture.

The slice may be decoded (e.g., after the slice header). For example, decoding the slice may involve prediction, residuals, and/or reconstruction process for a (e.g., each) block. If the slices (e.g., all of the slices) have been received and decoded, the loop filters may be applied to (e.g., processed on) the picture to obtain the final picture.

A VPS extension may be used for an external intra base layer. If the base layer is external, the picture may be fetched during the beginning of the decoding of the first enhancement layer picture. The Picture Order Count (POC) and Temporal Id (Tid) may be set to the value of the first enhancement layer picture, as illustrated in FIG. 9. The retrieved external picture may be stored in the DPB.

An output picture may refer to a picture that will be displayed (e.g., is output to a display). Examples of signaling the external picture are provided herein.

Feature(s) associated with external picture signaling in the case of an external base-layer are provided herein. The external base layer may be defined in the VPS (e.g., as an extension).

**Table 12: example VPS syntax**

| | |
|---|---|
| video_parameter_set_rbsp( ) { | **Descriptor** |
| vps_video_parameter_set_id | u(4) |
| vps_max_layers_minus1 | u(6) |
| vps_max_sublayers_minus1 | u(3) |
| [...] | |
| vps_extension_flag | u(1) |
| if( vps_extension_flag ) { | |
| while( !byte_aligned( ) ) | |
| vps_extension_alignment_bit_equal_to_one | u(1) |
| vps_extension( ) | |
| vps_extension2_flag | u(1) |
| if( vps_extension2_flag ) | |
| while( more_rbsp_data( ) ) | |
| } | |
| rbsp_trailing_bits( ) | |
| } | |

An example of the VPS syntax is described in Table 12. If the base layer is externally provided, the vps_extension_flag may be set to 1 (e.g., having the same meaning as when vps_base_layer_internal_flag = 0). External picture information may be sent (e.g., afterwards) in a vps_extension data structure.

A (e.g., new) vps_extension2_flag may be signaled (e.g., after the extension) for future extensions. The vps_extension2_flag may be "0" until a new extension is needed. If a given implementation of the decoder doesn't support the extension, the data after the last supported flag may be discarded.

The video parameter set extension syntax may be similar to that of a standard syntax. For example, the video parameter set extension syntax may include a representation format that defines one or more of the following. pic_width_vps_in_luma_samples and pic_height_vps_in_luma_samples may define the picture size. chroma_format_vps_idc and separate_colour_plane_vps_flag may define the chroma format that is used for the external picture. bit_depth_vps_luma_minus8 and bit_depth_vps_chroma_minus8 may define the bit depth. conf_win_vps_left_offset, conf_win_vps_right_offset, conf_win_vps_top_offset, and conf_win_vps_bottom_offset may define a conformance window applied to the external picture. vps_base_layer_internal_flag may be signaled in an extension.

This information may be signaled in an SPS extension, PPS extension, picture header, slice header bits extension, or an SEI message. This information may be signaled in an EPS (e.g., which is defined before).

A (e.g., single) layer with an external picture may be used.

In the single layer case, the VPS may not be present. In this case, the extension defining external picture may be signaled in an SPS extension, PPS extension, picture header, slice header bits extension, or an SEI message.

For the picture to be created, a picture header may be sent with additional external picture information. The picture header may refer to an SPS or a PPS that includes the external picture information.

For the external base-layer case, the decoding process may involve retrieving the external base layer picture (e.g., at the beginning of the decoding of a new picture). For example, the external base layer picture may be retrieved after the decoding of the slice segment header of the first slice segment, in decoding order, of the current picture. The external base layer picture may be retrieved prior to decoding a (e.g., any) slice segment of the first coded picture of the access unit.

For example, the decoding process may involve retrieving the external base layer picture at the beginning of the decoding of a new picture if one or more of the following conditions are satisfied: the Layerld of the current picture is above 0, the base layer is external, and/or the Temporalld is less than or equal to sub_layers_vps_max_minus1[ 0 ] (e.g., defined in VPS).

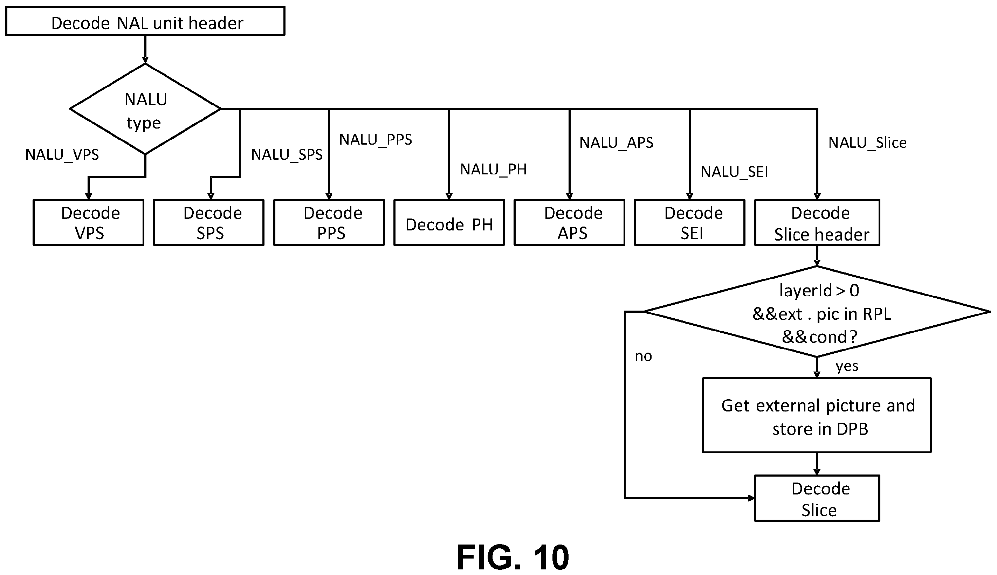

As illustrated in FIG. 10, the external base layer picture may be retrieved at the beginning of the decoding of a new slice. For example, the external base layer picture may be retrieved after the decoding of the slice segment header of the slice segment, in decoding order, of the current picture. The external base layer picture may be retrieved prior to decoding a (e.g., any) slice segment of the first coded picture of the access unit.

For example, the decoding process may involve retrieving the external base layer picture at the beginning of the decoding of a new picture if the external picture has not been retrieved yet for that current picture, and if one or more of the following conditions are satisfied: the Layerld of the current picture is above 0, the base layer is external, and/or the external base layer is used as reference (e.g., one of the reference pictures in the RPLs of the current picture has Layerld = 0).

Loading an external picture to the DPB depends on a parsing of the reference picture list.

FIG. 10 illustrates an example in which loading the external picture depends on a Reference Picture List. If an external picture (e.g., external layer) is in reference picture list, the external picture may be stored in the DPB.

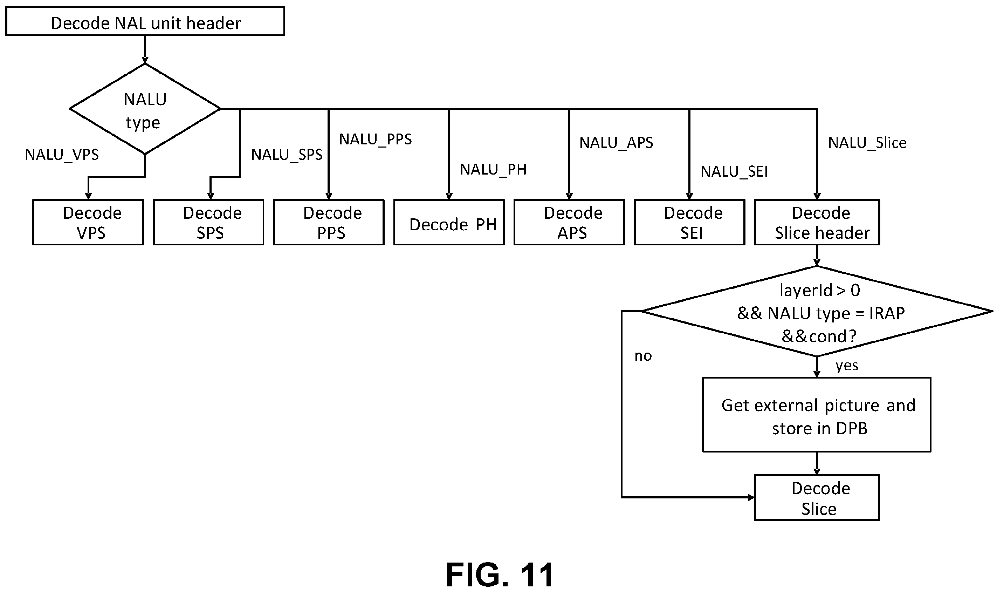

As illustrated in FIG. 11, the external base layer picture may be retrieved at the beginning of the decoding of a new picture (e.g., after the decoding of the slice segment header of the first slice segment, in decoding order, of the current picture, and prior to decoding any slice segment of the first coded picture of the access unit) if one or more of the following conditions are satisfied: the Layerld of the current picture is above 0, the base layer is external, and/or the current picture is a random-access point picture (e.g., the type of the NALU containing the slice (NALU type) is IDR_W_RADL, IDR_N_LP or CRA_NUT). Loading an external picture to the DPB may depend on the NALU type of the enhancement layer slice. FIG. 11 illustrates an example in which loading the external picture depends on NALU type.

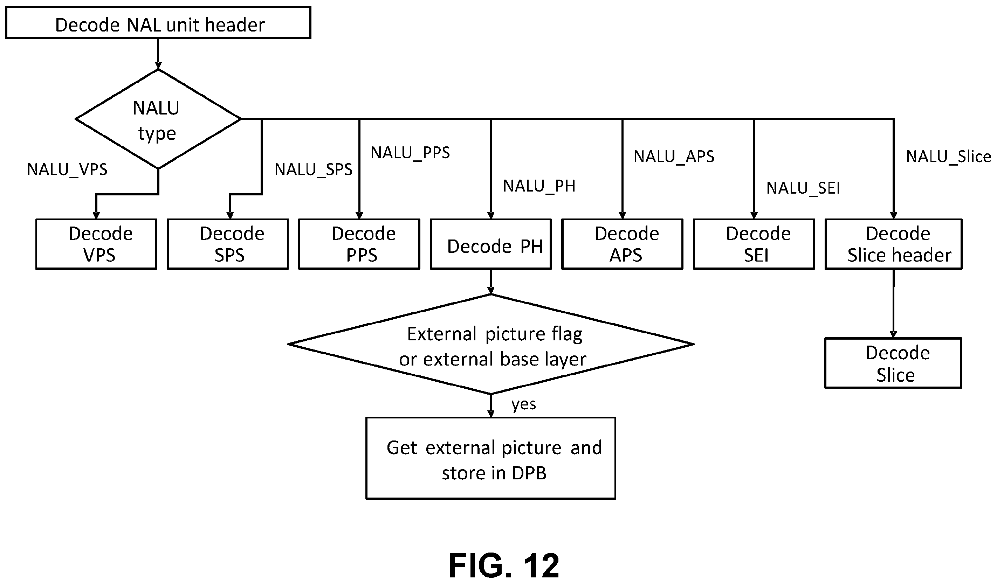

As illustrated in FIG. 12, a picture header defining an external picture may be received if an external base layer is set to be (e.g., needs to be) stored in the DPB. The picture header defining an external picture may be reduced (e.g., without unnecessary data related to decoding the picture, because the picture is already externally decoded). In example, the picture header may include the POC to be applied to the external picture. The Tid may be set to the Tid of the NALU containing the picture header.

Examples provided herein are described with respect to the picture header. However, a person of ordinary skill in the art will understand that the examples may also apply to another (e.g., any new type of) NALU. The NALU may include the external picture data (e.g., adding extra bits to the picture header) that would be externally decoded.

If a (e.g., new) NALU unit type is used to transmit the picture header, that picture header may be redefined as illustrated in Table 13.

**Table 13: external picture header example**

| | |
|---|---|
| External_picture_header_structure( ) { | **Descriptor** |
| ph_pic_parameter_set_id | ue(v) |
| ph_pic_order_cnt_lsb | u(v) |
| for(i = 0; i < NumExtraPhBits; i++) | |
| ph_extra_bit[ i ] | u(1) |
| if( sps_poc_msb_cycle_flag ) { | |
| ph_poc_msb_cycle_present_flag | u(1) |
| if( ph_poc_msb_cycle_present_flag ) | |
| ph_poc_msb_cycle_val | u(v) |
| } | |
| if( pps_picture_header_extension_present_flag ) { | |
| ph_extension_length | ue(v) |
| for( i = 0; i < ph_extension_length; i++) | |
| ph_extension_data_byte[ i ] | u(8) |
| } | |
| } | |

FIG. 12 illustrates an example of loading an external picture if a picture header of an external picture is received.

Examples of a (e.g., single) layer with an external picture are provided herein.

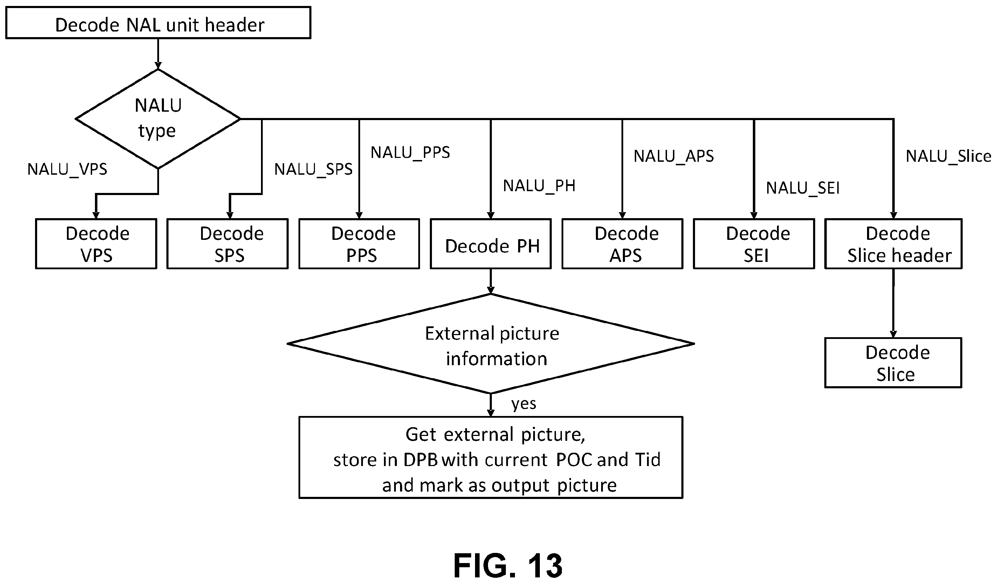

For a (e.g., single) layer, the previous example involving a picture header may be modified as illustrated in FIG. 13.

For example, a picture header may be received by the decoder. If the picture header describes an external picture (e.g., information that signals an external picture is present in the SPS, PPS, EPS, or the picture header), the external picture may be stored in the DPB, the picture header may include the POC to be applied to the external picture, and/or the layerld and Tid may be set to the layerld and Tid, respectively, of the NALU that includes the picture header (e.g., as aforementioned in the external base layer case). The picture may be marked as an output picture (e.g., the picture will be displayed).

FIG. 13 illustrates an example of loading external picture if a picture header of an external picture is received, setting the POC and TID to current values, and marking the picture as output picture.

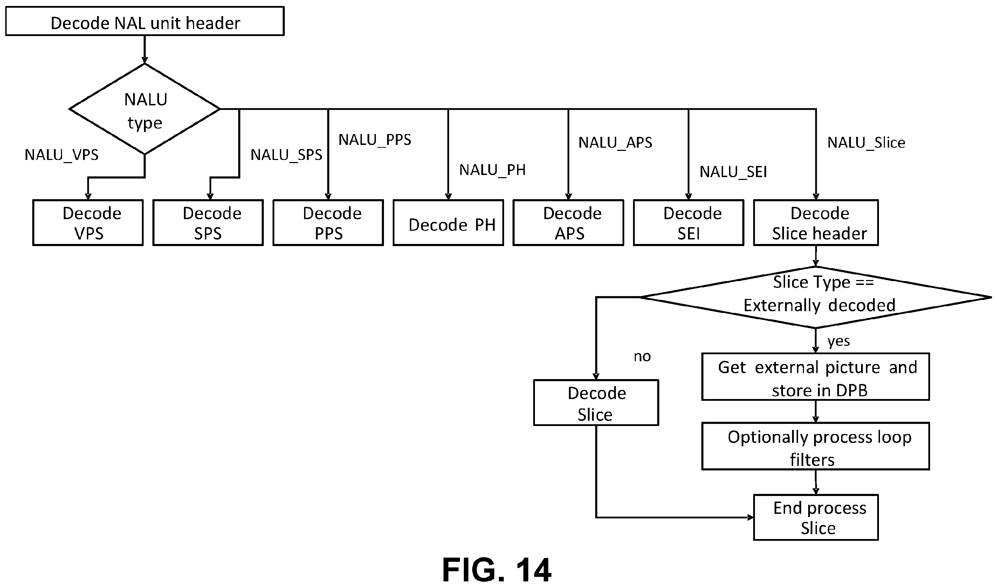

If a slice is received, the slice type may be checked (e.g., as illustrated in FIG. 14). The slice type may be defined in the slice header. If a (e.g., new) slice type defining an externally decoded picture is used, the externally decoded picture may be stored in the DPB. In this case, the slice may not be further decoded (e.g., may not need further decoding). Loop filters may be applied to the picture as defined in the picture header or slice header. The loop filters may be applied to the picture after (e.g., only after) the slices (e.g., all the slices) have been received (e.g., if the loop filters are applied on a per-picture basis).

If the (e.g., new) slice type is used, the signaling of the slice header may be modified (e.g., one or more syntax elements may not be needed and may be skipped).

FIG. 14 illustrates an example of loading an external picture if the slice type is external and storing the external picture in the DPB. Other slices may undergo decoding (e.g., a traditional decoding process).

The NALU type (e.g., the NALU type of the NALU containing the slice) may be checked (e.g., instead of the slice type). If the NALU type corresponds to an externally decoded picture NALU (e.g., or NN_NUT NAL unit type, defined herein), the externally decoded picture may be stored in the DPB. In this case, the syntax of the picture header and slice header may be reduced (e.g., to remove unnecessary information, for example, because the externally decoded picture property is known).

If vps_base_layer_internal_flag is equal to 0, vps_base_layer_available_flag is equal to 1, TargetDecLayerSetldx is in the range of 0 to vps_num_layer_sets_minus1, inclusive, Temporalld is less than or equal to sub_layers_vps_max_minus1[ 0 ], the current picture is the first coded picture of an access unit, and a decoded picture with nuh_layer_id equal to 0 is externally provided for the current access unit, the following decoding process may be employed (e.g., after decoding the slice segment header of the first slice segment (in decoding order) of the current picture, but prior to decoding any slice segment of the first coded picture of the access unit).

The decoding process for an external base layer picture that meets the above criteria may involve one or more of the following actions. For a picture with nuh_layer_id equal to 0 for the access unit, the Temporalld and PicOrderCntVal of the decoded picture with nuh_layer_id equal to 0 may be set equal to the Temporalld and PicOrderCntVal, respectively, of a (e.g., any) picture with nuh_layer_id greater than 0 in the access unit. The decoded picture with nuh_layer_id equal to 0 may be stored in the sub-DPB for the layer with nuh_layer_id equal to 0. The decoded picture with nuh_layer_id equal to 0 may be marked as "used for long-term reference."

Based on this, the existing capabilities of using an external base layer may include one or more of the following. The external base layer may be provided/used for (e.g., only for) Tids <= someTid (e.g., where someTid is defined in the VPS with sub_layers_vps_max_minus1[ 0 ]).

The external base layer may be fetched at the beginning (e.g., after slice header and before decoding any slice) of the first slice of the first picture of an access unit if a layer with nuh_layer_id > 0 and an external base layer is used. The size of the picture, chroma format, and bit depth of the external base layer may be defined in a VPS extension.

In one or more examples as described herein, format information (e.g., bit depth and/or chroma format) of an external picture may not be signaled in the VPS. An external picture may include a picture that is obtained from an external coding source (e.g., coded using a codec that is the same or different from the codec used to code the current picture). The format information of the external picture may be modified (e.g., adapted when they do not match a target and/or expected format, for example, the format expected by the current layer).

In one or more examples herein, format information (e.g., picture format parameter(s)) may be inferred, and/or a modification (e.g., a conversion) may be performed when handling external picture(s).

In one or more examples as described herein, signaled information (e.g., format information) related to external picture may be modified (e.g., adapted to the parameters of the sequence and/or layer that uses external picture). In examples, the format information of an external picture may be inferred (e.g., format inference) based on the first received picture (and/or or slice of picture) that refers to an external picture (e.g., the first received picture that has the external picture in its reference list), from the first SPS (e.g., the SPS of the first received picture), and/or from the PPS of first received picture,

In one or more examples as described herein, an external picture may be modified (e.g., conversion while storing into the DPB) and/or stored in a picture buffer (e.g., a DPB). For example, a conversion may be performed from a VPS format to a target format (e.g., a target format expected for the decoding).

In one or more examples herein, a slice type may be modified (e.g., slice type changing and/or constraint relaxing on the slice type).

In one or more examples as described herein, format information of an external picture may be modified (e.g., external picture chroma format information and/or external picture bit depth adaptation). As described in one or more examples herein, a triggering criterion for obtaining an external picture may be met (e.g., the process for triggering the need for storing an external picture in the DPB has been described in one or more examples herein).

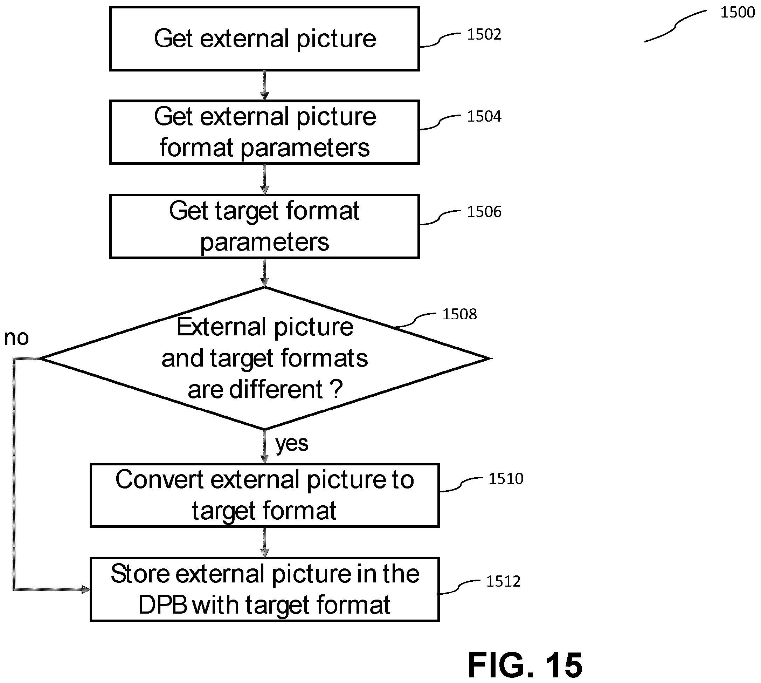

FIG. 15 illustrates an example of a process, 1500, for storing an external picture in the DPB. As shown in FIG. 15, an external picture may be obtained at 1502 (e.g., the external picture may be first retrieved from the external decoder). Format information associated with the external picture may be obtained at 1504 (e.g., the external picture format parameters may be retrieved from the current decoder). At 1506, target format information may be obtained (e.g., the target format parameters may be retrieved from the current decoder). At 1508, it may be determined whether the format information of the external picture is different from the targe format information. For example, if the external picture format parameter(s) and the target format parameter(s) are not the same, the external picture may be modified (e.g., converted) at 1510. The external picture may be converted to the target format (e.g., if conversion is needed) and then, at 1512, stored (e.g., stored in the DPB with the target format).

Format information (e.g., bit depth, chroma format, etc.) may be inferred, for example, at a decoder. In some examples, the format information (e.g. the external picture format parameters, including the bit depth, the chroma format, etc.) of the external picture may not be signaled in the VPS (e.g., VPS extension). In that case, the format information (e.g., these parameters) may be inferred, for example, by the decoder. In examples, the bit depth of luma and chroma channels may be different. The determination of the format information (e.g., the inference of the format information) may not be done for every picture. For example, the determination (e.g., the inference) may be done once and/or updated, for example, updated only after receiving an IDR picture, or CRA, IRAP, or GDR picture (e.g., not every picture).

In examples, the determination (e.g., the inference) may be done, for example, by using the chroma format and/or bit depth information from the currently decoding picture. For example, if getting the external picture has been triggered by a multi-layer picture having an external base layer picture as the reference picture (e.g. an external base layer picture exists in its reference picture list), the currently decoding picture may be that multi-layer picture. In examples, the currently decoding picture may be the first multi-layer picture having an external base layer picture as the reference picture.

In case getting the external picture has been triggered by one or more of the following: an external picture header, an external slice, or picture header NAL unit type, the currently decoding picture may be the picture containing the slice or referring to the picture header.

The format information (e.g., the chroma format and/or the bit-depth) of the currently decoding picture may be derived, for example, from one or more of the following: the SPS, the PPS, the picture header, or the slice header.

In some examples, the determination (e.g., the inference) may be done, for example, by using the chroma format and/or bit depth information from one or more of the following: a previously available VPS external picture (and/or chroma format information); the first received SPS (or PPS) since the last CRA or IDR or GDR picture; the SPS (or PPS) that the currently decoding picture refers to; the SPS (or PPS) with the lowest SPS (or PPS) identification number (e.g., SPS_ID and/or PPS_ID).

The external picture may be modified (e.g., bit depth and/or chroma format conversion at a decoder). In examples, the target format information (e.g., the target format parameters) may include the bit depth and/or the chroma format of a picture (e.g., the external picture) stored in the DPB. For example, the target format information may include format parameter(s) of the picture that the decoder expects for outputting or for using as a reference picture. The target format parameters may be derived (e.g., inferred) as one or more examples described herein. In some examples, it may be required that the target format parameters are the same as: the format parameters of a multi-layer picture having an external base layer picture as a reference picture and/or the format parameters of other pictures in the same layer (e.g., the same layer as the multi-layer picture).

In examples, the format information of an external picture (e.g., the external picture format parameters) may differ from the target format information (e.g., the target format parameters). For example, the external picture format parameters signaled in the VPS may not be the same as the target format parameters. In some examples, the derivation process of the target format parameters may not be the same as the inference process of the external picture format parameters.

The external picture may be modified. For example, if the two sets of format parameters (e.g., the external picture format parameters and the target format parameters) differ, the external picture may be converted (e.g., from the external picture format parameters to the target format parameters).

In examples, bit depth conversion may be performed (e.g., using bit depth rescaling) using one or more of the following: the difference between the target and external bit depth may be computed, for example, using *bitdepthShift = targetBitDepth - externalBitDepth*; if ( *bitdepthShift* > 0) for a (e.g., every) pixel of the external picture, values may be rescaled, for example, by adding zero lowest significant bits: *img*[*x*] *<<= bitdepthShift* (e.g., conversion from 8 to 10 bits by shifting 2 bits to the left); else if (*bitdepthShift* < 0) for a (e.g., every) pixel of the external picture, values may be rescaled by removing the lowest significant bits and rounding: *img*[*x*] *=* (*img*[*x*] *+ rounding) >> bitdepthShift*)(e.g., conversion from 10 to 8 bits by shifting 2 bits to the right and rounding). In examples, if (*bitdepthShift* = 0) for a (e.g., every) pixel of the external picture, the bit depth of the external picture may not be modified (e.g., the external picture may be the same bit depth as the target format information).

In examples, chroma format conversion may be performed, for example, including chroma rescaling amongst 4:2:0, 4:2:2, and/or 4:4:4 chroma format; color conversion amongst YUV and/or RGB; and/or the combination of chroma rescaling and color conversion. For example, conversion from 4:2:0 to 4:4:4 may use (e.g., require) upscaling the resolution of chroma components by a factor of 2 in a (e.g., each) dimension. Color conversion from RGB to YUV 4:2:0 may require color conversion from RGB to YUV color space combined with downscaling the resolution of chroma component resolution by a factor of 2 in a (e.g., each) dimension.

The type of the first received slice may be conditionally checked. In examples, it may be a conformance requirement that the first slice of sequence is an intra-Slice. In some examples, if an external base layer is used, the first decoded slice may or may not be an intra slice (e.g., because the base layer is externally decoded).

One or more conditions on the type of the first received slice may be adapted in case the external base layer is used. For example, the conformance requirement may require that the first received slice is an intra slice (condition A), or that the following conditions are true (condition B may require that all of them are true): the base layer is external; the current layer uses (e.g., depends on) the base layer; and an external base layer picture is present in the reference picture list of the first slice.

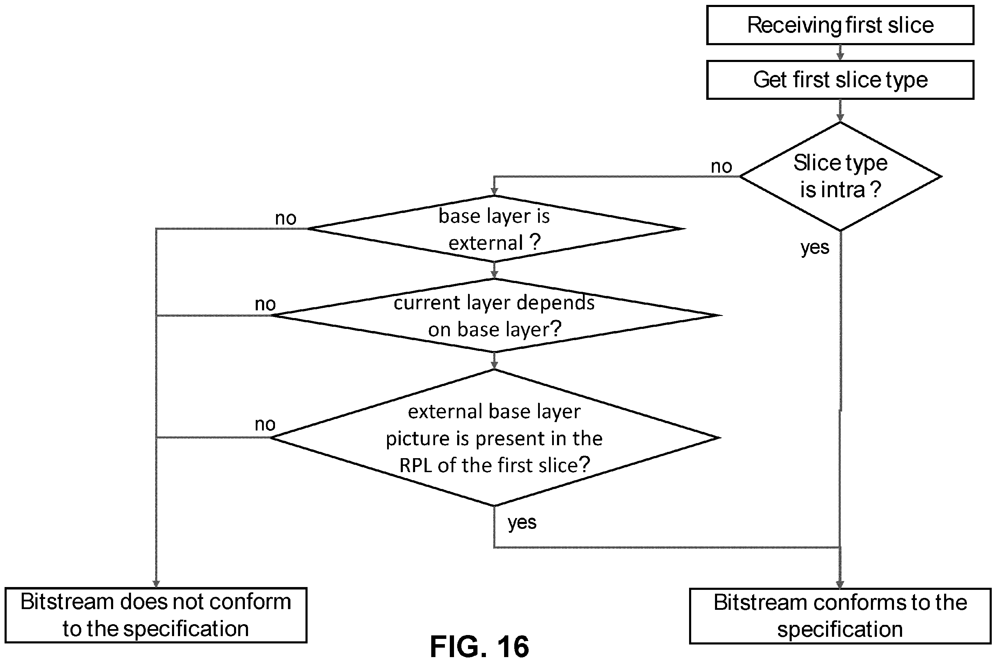

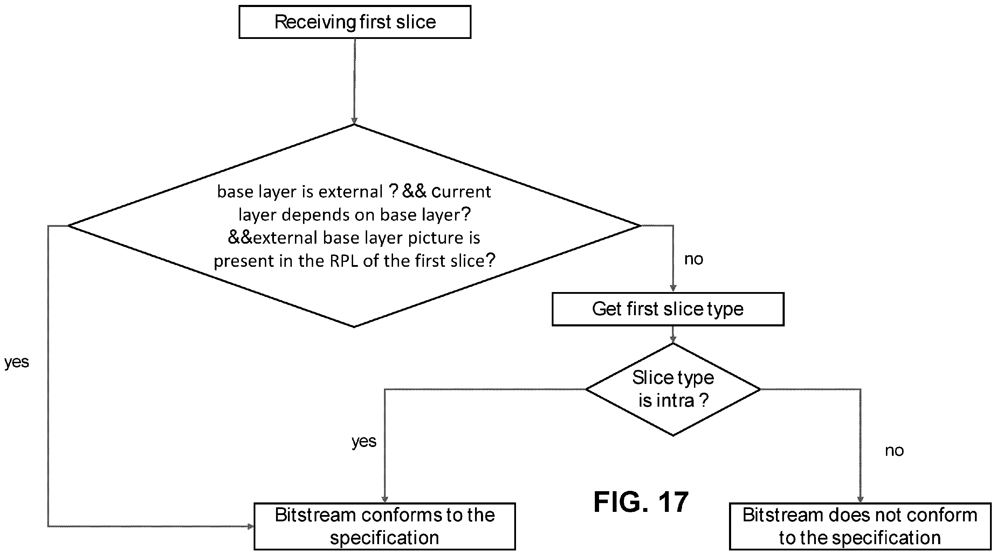

The order in which condition A and B are tested may be reversed or inverted (e.g., as one condition A or B needs to be true). Condition A may be tested first, and condition B may be tested if A is false (e.g., as shown in FIG. 16), or condition B may be tested first, and condition A may be tested if B is false (e.g., testing A may be skipped if B is true), as shown in FIG. 17. FIG. 16 and FIG. 17 show 2 different implementation orders.

In examples, if condition B is true (e.g., the base layer is external, the current layer uses (e.g., depends on) the base layer, and an external base layer picture is present in the reference picture list of the first slice), the slice type may be changed to intra-slice for the conformance checking of the first received slice type. In some examples, an additional virtual slice with intra slice type may be inserted as the first slice to refer to the external base layer picture for conformance checking.

One or more examples herein may be applicable to end-to-end compression. One or more examples herein may be combined with other codecs (e.g., a JVET codec). Information (e.g., the format information) used in one or more examples herein may be encoded in the bitstream.

Decoding tools and techniques (e.g., as illustrated in FIG. 3) including, for example, one or more of entropy decoding, inverse quantization, inverse transformation, and differential decoding may be used to enable one or more examples as described herein in a decoder. For example, these decoding tools and techniques may be used to enable one or more of: obtaining an external picture, for example, based on one or more triggering criterion for obtaining an external picture being met; obtaining format information (e.g., target picture format information); obtaining first format information; obtaining second format information; receiving the second format information in video data; determining whether to modify the external picture based on the first and second format information (e.g., by comparing the first and second format information); obtaining format information to be used for generating a reconstructed picture; obtaining format information of a reconstructed picture; determining whether to modify the external picture based on the format information; determining to modify the external picture, for example, if the format information associated with the reconstructed picture differs from the format information associated with the external picture; storing the external picture or a modification of the external picture based on the determination of whether to modify the external picture; storing the external picture, for example, if the format information associated with the reconstructed picture corresponds to (e.g., is the same as) the format information associated with the external picture; storing a modification of the external picture, for example, if the format information associated with the reconstructed picture does not correspond to the format information associated with the external picture; obtaining the format information associated with the reconstructed picture based on format information associated with a sequence of pictures and/or based on format information associated with a layer (e.g., the sequence and/or layer of pictures may include the reconstructed picture); obtaining chroma format information associated with the external picture; determining that the chroma format information associated with the external picture differs from the chroma format information associated with the reconstructed picture; modifying the external picture (e.g., modify the format of the external picture) according to the chroma format information associated with the reconstructed picture; obtaining bit depth information associated with the external picture; determining that the bit depth information associated with the external picture differs from the bit depth information associated with the reconstructed picture; modifying the external picture (e.g., modifying the format of the external picture) according to the bit depth information associated with the reconstructed picture; using one or more of bit depth rescaling, color rescaling, or color conversion to modify the external picture; obtaining the format information associated with the external picture; obtaining the format information associated with the external picture based on signaled information (e.g., in video parameter set extension); obtaining the format information associated with the external picture based on a picture associated with the second layer of a plurality of layers associated with the video content; determining that the video content is associated with the plurality of layers; determining that a picture of the second layer (e.g., an enhancement layer) of the plurality of layers is to be predicted using a first layer (e.g., a base layer) of the plurality of layers; determining that the first layer of the plurality of layers includes one or more external pictures; determining that a reference picture list associated with the picture of the second layer includes one or more external pictures (e.g., the one or more external pictures of the first layer); obtaining the format information associated with the external picture based on the picture associated with the second layer; determining whether to modify the external picture based on the obtained format information associated with the external picture; obtaining an external slice indicator (e.g., an indicator that indicates that an external picture and/or slice is obtained); determining that a current picture comprises an external slice or refers to the external slice (and/or an external picture), based on the external slice indicator; obtaining format information associated with the external picture based on the current picture (e.g., based on a format of the current picture); determining whether to modify the external picture based on the obtained format information of the external picture; obtaining the external slice indicator based on a picture header, a slice header, or a picture header network abstraction layer (NAL) unit type; generating the reconstructed picture using a reference picture that is not from an external decoding source; etc.

Encoding tools and techniques (e.g., as illustrated in FIG. 2) including one or more of quantization, entropy coding, inverse quantization, inverse transformation, and differential coding may be used to enable one or more examples as described herein in the encoder. For example, these encoding tools and techniques may be used to enable one or more of: obtaining an external picture, for example, based on one or more triggering criterion for obtaining an external picture being met; obtaining format information (e.g., target picture format information); obtaining first format information; obtaining second format information; including the second format information in video data; determining whether to modify the external picture based on the first and second format information (e.g., by comparing the first and second format information); obtaining format information to be used for generating a reconstructed picture; obtaining format information of a reconstructed picture; determining whether to modify the external picture based on the format information; determining to modify the external picture, for example, if the format information associated with the reconstructed picture differs from the format information associated with the external picture; storing the external picture or a modification of the external picture based on the determination of whether to modify the external picture; storing the external picture, for example, if the format information associated with the reconstructed picture corresponds to (e.g., is the same as) the format information associated with the external picture; storing a modification of the external picture, for example, if the format information associated with the reconstructed picture does not correspond to the format information associated with the external picture; encoding a video block based on the external picture or the modification of the external picture; obtaining the format information associated with the reconstructed picture based on format information associated with a sequence of pictures and/or based on format information associated with a layer (e.g., the sequence and/or layer of pictures may include the reconstructed picture); obtaining chroma format information associated with the external picture; determining that the chroma format information associated with the external picture differs from the chroma format information associated with the reconstructed picture; modifying the external picture (e.g., modify the format of the external picture) according to the chroma format information associated with the reconstructed picture; obtaining bit depth information associated with the external picture; determining that the bit depth information associated with the external picture differs from the bit depth information associated with the reconstructed picture; modifying the external picture (e.g., modifying the format of the external picture) according to the bit depth information associated with the reconstructed picture; using one or more of bit depth rescaling, color rescaling, or color conversion to modify the external picture; obtaining the format information associated with the external picture; signaling the format information associated with the external picture (e.g., in video parameter set extension); obtaining the format information associated with the external picture based on a picture associated with the second layer of a plurality of layers associated with the video content; determining that the video content is associated with the plurality of layers; determining that a picture of the second layer (e.g., an enhancement layer) of the plurality of layers is to be predicted using a first layer (e.g., a base layer) of the plurality of layers; determining that the first layer of the plurality of layers includes one or more external pictures; determining that a reference picture list associated with the picture of the second layer includes one or more external pictures (e.g., the one or more external pictures of the first layer); obtaining the format information associated with the external picture based on the picture associated with the second layer; determining whether to modify the external picture based on the obtained format information associated with the external picture; sending an external slice indicator (e.g., an indicator that indicates that an external picture and/or slice is obtained); determining that a current picture comprises an external slice or refers to the external slice (and/or an external picture); obtaining format information associated with the external picture based on the current picture (e.g., based on a format of the current picture); determining whether to modify the external picture based on the obtained format information of the external picture; signaling the external slice indicator based on a picture header, a slice header, or a picture header network abstraction layer (NAL) unit type; generating the reconstructed picture using a reference picture that is not from an external decoding source; etc.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A device for decoding video content, comprising:
a processor configured to:
obtain an external picture;
obtain first format information to be used for generating a reconstructed picture;
obtain second format information associated with the external picture;
based on the first and second format information, determine whether to modify the external picture; and
store the external picture or the modified external picture based on the determination of whether to modify the external picture.

2. A device for encoding video content, comprising:
a processor configured to:
obtain an external picture;
obtain first format information to be used for generating a reconstructed picture;
obtain second format information associated with the external picture;
based on the first and second format information, determine whether to modify the external picture; and
encode a video block based on the external picture or the modified external picture.

3. The device of claim 1 or claim 2, wherein the first format information is obtained based on format information associated with a sequence of pictures, and wherein the sequence of pictures comprises the reconstructed picture.

4. The device of any one of claims 1-3, wherein the first format information comprises chroma format information associated with the reconstructed picture, the second format information comprises chroma format information associated with the external picture, and the processor is further configured to:
determine that the chroma format information associated with the external picture differs from the chroma format information associated with the reconstructed picture; and
modify the external picture in accordance with the chroma format information associated with the reconstructed picture.

5. The device of any one of claims 1-3, wherein the first format information comprises bit depth information associated with the reconstructed picture, the second format information comprises bit depth information associated with the external picture, and the processor is further configured to:
determine that the bit depth information associated with the external picture differs from the bit depth information associated with the reconstructed picture; and
modify the external picture in accordance with the bit depth information associated with the reconstructed picture.

6. The device of claim 4 or claim 5, wherein one or more of bit depth rescaling, color rescaling, or color conversion are used to modify the external picture.

7. The device of any one of claims 1-6, wherein the processor is further configured to:
determine that the video content is associated with a plurality of layers;
determine that a picture of a second layer of the plurality of layers is to be predicted using a picture of a first layer of the plurality of layers;
determine that the first layer of the plurality of layers comprises one or more external pictures; and
determine that a reference picture list associated with the picture of the second layer comprises the one or more external pictures of the first layer.

8. The device of claim 7, wherein the processor is further configured to obtain the second format information based on the picture associated with the second layer.

9. The device of any one of claims 1-6, wherein the processor is further configured to:
obtain an external slice indicator;
based on the external slice indicator, determine that a current picture comprises an external slice or refers to the external slice; and
obtain the second format information based on the current picture.

10. The device of claim 9, wherein the external slice indicator is obtained based on a picture header, a slice header, or a picture header network abstraction layer (NAL) unit type.

11. The device of any one of claims 1 and 3-6, wherein the second format information is received in video data, and wherein the processor being configured to determine whether to modify the external picture comprises the processor being configured to compare the first and second format information.

12. A method for decoding video content, comprising:
obtaining an external picture;
obtaining first format information to be used for generating a reconstructed picture;
obtaining second format information associated with the external picture;
based on the first and second format information, determining whether to modify the external picture; and
storing the external picture or the modified external picture based on the determination of whether to modify the external picture.

13. A method for encoding video content, comprising:
obtaining an external picture;
obtaining first format information to be used for generating a reconstructed picture;
obtaining second format information associated with the external picture;
based on the first and second format information, determining whether to modify the external picture; and
encoding a video block based on the external picture or the modified external picture.

14. The method of claim 12 or claim 13, wherein the first format information is obtained based on format information associated with a sequence of pictures, and wherein the sequence of pictures comprises the reconstructed picture.

15. The method of any one of claims 12-14, wherein the first format information comprises chroma format information associated with the reconstructed picture, the second format information comprises chroma format information associated with the external picture, and the method further comprises:
determining that the chroma format information associated with the external picture differs from the chroma format information associated with the reconstructed picture; and
modifying the external picture in accordance with the chroma format information associated with the reconstructed picture.
